# EUROPÄISCHE PATENTSCHRIFT

(11) **EP 3 948 062 B1**
(45) Veröffentlichungstag und Bekanntmachung des Hinweises auf die Patenterteilung: **20.08.2025**
(21) Anmeldenummer: 20716217.3
(22) Anmeldetag: 26.03.2020
(51) Int. Cl.: H05B 45/395, F21S 4/24

(54) **KONSTANTSPANNUNGS-LED-STREIFEN (SELV)**
CONSTANT VOLTAGE LED STRIP (SELV)
BANDES À DEL À TENSION CONSTANTE (SELV)

(30) Priorität: 28.03.2019 EP 19165942
(43) Veröffentlichungstag der Anmeldung: 09.02.2022
(73) Patentinhaber: Stepan Engineering GmbH, 8887 Mels (CH)
(72) Erfinder: STEPAN, Thomas, 7208 Malans (CH); STEPAN, Peter, 8887 Mels (CH)
(74) Vertreter: PPR AG
(86) Internationale Anmeldenummer: PCT/IB2020/052872
(87) Internationale Veröffentlichungsnummer: WO 2020/194236

(56) Entgegenhaltungen:
- EP-A1- 3 290 787
- EP-A1- 3 290 787
- EP-A1- 3 334 263
- EP-A1- 3 334 263
- WO-A1-2008/112284
- WO-A1-2008/112284
- WO-A1-2009/069062
- WO-A1-2009/069062
- DE-A1- 102009 008 095
- DE-A1- 102009 008 095
- DE-U1- 202018 104 566
- DE-U1- 202018 104 566
- FR-A1- 3 048 056
- FR-A1- 3 048 056

## Beschreibung

Die Erfindung betrifft LED-Streifen gemäss dem Oberbegriff des Anspruchs 1. Die Erfindung betrifft somit insbesondere Konstantspannungs-LED-Streifen, bei denen die LED's mittels neuartiger Anschlusskonfigurationen mit unterschiedlichen Lichtströmen/Leistungen betrieben werden können. Weiter betrifft die Erfindung ein Verfahren zur Auswahl einer bestimmten Leuchtstärken eines Konstantspannungs-LED-Streifens gemäss dem Oberbegriff des Anspruchs 13.

Insbesondere geht es um Konstantspannungs-LED-Streifen (im Folgenden meistens nur mit der nachfolgenden Abkürzung bezeichnet: SELV) aus einem ersten, einem nachfolgenden zweiten und nachfolgenden n-ten - seriell angeordneten und voneinander trennbaren - parallel geschalteten Lichterzeugermodul, mit jeweils einem ersten internen durchgeschleiften Netz für die eigene Stromversorgung jedes Lichterzeugermoduls und für die Stromversorgung jeder der nachfolgenden zweiten bzw. n-ten Lichterzeugermodule, wenigstens je eine LED - in der Regel mehrere LED's pro Lichterzeugermodul - o.dgl.. Mit "o.dgl." ist gemeint, dass die Erfindung nicht auf LED's als solche eingeschränkt ist. Als Lichterzeugerelemente können auch beliebig andere Lichtquellen dienen, sofern sie in einem Lichterzeugermodul nach Art eines LED-Streifens bzw. eines Konstantspannungs-LED-Streifen (SELV) eingesetzt werden können, wie z. B. Laserdioden, OLED Leuchtelemente, Glühfadenlampen o.dgl.

Weiters umfassen diese SELV's - wie an sich bekannt - wenigstens je eine elektronische Steuerung für diese LED o.dgl., welche die LED o.dgl. im Betriebsfall bestromt, Eingangs- und Ausgangsanschlussbahnen zum Anschliessen des elektrischen Netzes an eine Versorgungsspannung, wobei an jeder Eingangs- und Ausgangsanschlussbahn wenigstens je eine Durchschnittstelle zum Durchtrennen des Streifens zwischen zwei Lichterzeugermodulen mittels Schneideeinrichtung (Schere o.dgl.) vorgesehen sind, so dass jedes (getrennte) Lichterzeugermodul oder alle verbundenen Lichterzeugermodule bei Bedarf über seine Eingangs- und/oder Ausgangsanschlussbahnen (individuell) an eine Versorgungsspannung anschliessbar ist bzw. sind.

Diese bekannten Durchschnittsstellen dienen dem Ablängen des SELV's auf die benötigte Länge zum Einbau in eine Lampe oder zur Montage an einem Objekt. Schneidet man herkömmliche SELV's an ihren Durchschnittsstellen durch, dann trennt man dadurch die grundsätzlich verbundenen Eingangsanschlussbahnen von den Ausgangsanschlussbahnen. Mit anderen Worten, aus einer verbundenen Eingangs- und Ausgangsanschlussbahn werden separierte Ausgangsanschlussbahnen am ersten Lichterzeugermodul und Eingangsanschlussbahnen am (nachfolgenden) zweiten Lichterzeugermodul. Somit sind - elektrisch gesehen - die Ausgangsanschlussbahnen und die Eingangsanschlussbahnen bis zum Durchschneiden immer am selben Potential.

Bekannt sind als nächstliegender Stand der Technik flexible oder starre LED-Streifen (SELV's) mit einem Spannungsbereich von typischer Weise 12, 24 oder 48 VDC. Solche Streifen werden je nach anzuwendender Versorgungs-Spannung, nach Leistung und nach gewünschtem Lichtstrom produziert und gelagert, obwohl u. U. die LED's selbst und die Elektronik selbst im Wesentlichen identisch aufgebaut sind. Bei unterschiedlichen Spannungen sind z.B. die Anzahl LED's unterschiedlich und die Elektronik entsprechend angepasst. Z.B. 3 LED's bei 12V, 6 LED's bei 24V, 12 LED's bei 48V. Es können auch mehr oder weniger LED's je nach Typ und Spannung sein - es gibt z.B. auch LED's mit einer Vorwärtsspannung von ~12V). Selbstverständlich können innerhalb eines LED-Streifens LED's auch parallel geschaltet sein, vor allem, wenn die Versorgungsspannung niedriger ist, um trotzdem gleiche Beleuchtungsstärke zu erzielen.

Angeschlossen werden die flexiblen SELV's mittels zwei Lötpads (Ground ,,-,, und Spannung "+"), welche mit einer Zuleitung verlötet werden oder mittels einem Klemmstecker kontaktiert werden. Solche Klemmstecker werden oft auch als PCB-Steckverbindungen bezeichnet.

Als Standard verfügt jedes Lichterzeugermodul jedes SELV's über eine elektronische Stromregelung, welche die LED's pro Lichterzeugermodul oder Abschnitt (meistens 6 - 8 LED's in Serie) mit einem vordefinierten Strom betreiben. Diese einzelnen Stromerzeugermodule sind - wie schon erwähnt - parallel auf dem flexiblen Streifen angeordnet, so dass sich eine Kette (serieller Strip) von zusammengeschalteten LED's bildet, welche mit der Konstantspannung betrieben wird.

Daraus folgt, dass pro Leistung/Lichtstrom ein spezieller Typ LED-Streifen verwendet/gelagert wird. Der Markt (Verarbeiter/Endkunden) verlangt je nach Anwendung differenzierte Licht-Leistungen/Lichtströme - für Leuchten typischerweise im Bereich von 600 - 4000 Im (Lumen) pro Laufmeter.

Die Firma Tridonic GmbH & Co KG offenbart und produziert eine solche typische Leuchte unter der Bezeichnung "talexxmodul", wie im März 2019 über diese URL https://www.tridonic.ch/ch/products/talexxmodule-Ile-flex-g1-8mm-exc.asp eingesehen werden kann.

Ebenso fallen von der Firma Tridonic GmbH & Co KG im März 2019 auch die folgenden SELV's unter den Stand der Technik: LLEFLEXG1EXC mit vier verschiedenen Lichtströmen 600, 1200, 1800 und 2500 Im.

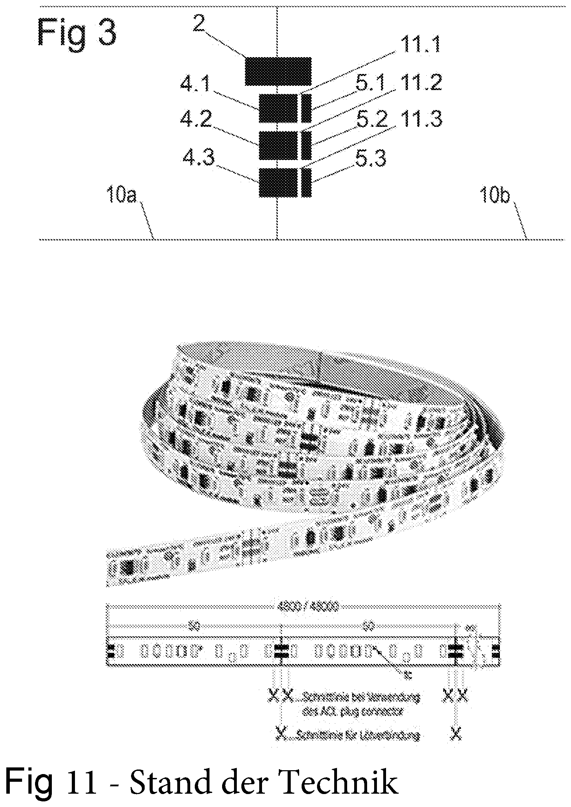

Der typische Aufbau zeigt sich dabei wie auf Fig.11 (ein Bild aus der zitierten URL).

Man erkennt in der Fig. 11 drei Durchschnittsstellen pro Eingangs- und Ausgangsanschlussbahnen: eine mittige für eine Lötverbindung und zwei seitliche für eine Verbindung mittels Stecker. Auch die Erfindung hält an dieser Praxis fest und bietet wenigstens eine Durchschnittsstelle oder zwei oder drei, wie in Fig. 11 gezeigt. Ebenso nutzt die Erfindung verschiedene Kontaktierungsmöglichkeiten, wie Löten oder Kontaktstecker.

Stand der Technik ist somit, dass die SELV's immer in derselben Konfiguration - sprich 6-8 LED/Lichterzeugermodul hergestellt werden. Eine typische Länge eines solchen Moduls ist z. B. 5 cm. Die unterschiedlichen Leistungen werden über die jeweils speziell programmierte elektronische Schaltung gemacht. Dies immer pro Typ SELV. Bei einer Leuchten-Herstellerfirma sind z. B. jeweils in je 50 m-Rollen zwei verschiedenen Leistungsstufen auf Lager. Das Layout wie auch die LED's sind bei den Typen genau gleich, nur die Bestromung der LED (=Leistung) ist unterschiedlich, durch eine werkseitig unterschiedliche Konfigurierung der Elektronik aller Lichterzeugermodule.

Somit ist Standard, dass die Lichterzeugermodule an sich immer auf Maximalleistung ausgelegt werden, dass jedoch durch einen produktionstechnischen Eingriff in die elektronische Steuerung bei der Herstellung der SELV's die Lichtleistung über eine voreingestellte Bestromung definiert wird.

Für unterschiedliche Lichtleistungen werden somit nahezu identische SELV's hergestellt, die nach den unterschiedlichen Lichtleistungen getrennt am Lager gehalten werden müssen.

Überlegungen, für unterschiedliche Lichtleistungen am gleichen SELV einfach unterschiedliche Spannungen auf der Eingangsseite zu wählen, schlugen fehl. Dies deshalb, weil wenn man über verschiedene Netzspannungen am SELV Schalt-Regler bräuchte, die jedoch für LED Lichterzeugermodule ungeeignet sind.

Schalt-Regler haben nämlich einen hohen Preis, stellen zusätzliche Komponenten dar, sind schlecht PWM Dimmbar (wegen Impedanzen, was zu einem Flackern des Lichts in gewissen Bereichen führen kann). Sie benötigen ausserdem Kondensatoren, die die Lebenszeit der elektronischen Schaltung begrenzen, und benötigen für den Betrieb an verschiedenen Spannungen verschiedene Netzteile, was wiederum zu mehr Lageraufwand führt, insbesondere bei ON/OFF-Varianten und DALI-Varianten. "DALI" bedeutet "Digital Addressable Lighting Interface". Es ist ein Kommunikationsprotokoll für den Beleuchtungsbereich in Gebäuden und dient zur Kommunikation zwischen lichttechnischen Betriebsgeräten, wie z. B. elektronischen Vorschaltgeräten, Helligkeitssensoren oder Präsenzmeldern.

Die heute verwendete Technik auf der elektrischen/elektronischen Seite von SELV's ist somit ausbalanciert nach technischer Leistung, Kosten und Lebensdauer.

Aufgabe der vorliegenden Erfindung ist es, die Flexibilität im Einsatz von Konstantspannungs-LED-Streifen (SELV's) zu erhöhen und zwar insbesondere auch dahingehend, dass für verschiedene Licht-Leistungen nicht verschiedene SELV's hergestellt und gelagert werden müssen. Das soll helfen, Lagerkosten (Lagerbedarf) zu reduzieren.

Anstelle Leuchten mit unterschiedlichen Leistungen herzustellen, ist erfindungsgemäss beabsichtigt, eine Einheitsleuchte herzustellen, bei der dann lediglich durch schaltungstechnische Massnahmen werkseitig bzw. bei der Installation an einer Baustelle eine unterschiedliche Leistungsabgabe einstellbar ist.

Daraus ergeben sich die folgenden Vorteile: Höhere Stückzahl von SELV's in der Massenfertigung, geringere Lagerhaltungskosten, flexiblere Anwendung.

Dies wird immer wichtiger, da z.B. bei einer neueren Generation von LED's, die neuen LED's sehr schnell eingesetzt werden und die alten vom Programm abgesetzt. Das kann mit geringerem Sortiment auf Lager einfacher durchgeführt werden. Somit ist das mit Hilfe der Erfindung kosten- und ressourcen-schonend. Das wird immer wichtiger, da die Entwicklung sehr rasant verläuft.

Die Aufgabe wird durch die Merkmale der unabhängigen Ansprüche gelöst. Vorteilhafte Weiterbildungen sind in den Figuren, der Figurenbeschreibung und in den abhängigen Patentansprüchen dargelegt.

Weiterer Stand der Technik SELV ist nachfolgend angegeben, obwohl der in Fig.11 abgebildete Stand der Technik nächstliegend ist.

Die DE202018104566 (U1) - «Zweifach-spannungsfähige Beleuchtungseinrichtung» betrifft eine Beleuchtungseinrichtung, mit einem Träger und mehreren auf dem Träger angeordneten, als LEDs ausgestalteten Leuchtmitteln, sowie mit auf dem Träger angeordneten Leiterbahnen zur Versorgung der LEDs mit elektrischer Energie, wobei die Leiterbahnen den Anschluss an eine Energieversorgung ermöglichende Kontaktstellen aufweisen, und wobei die Leiterbahnen derart angeordnet sind, dass jeweils mehrere LEDs zu einer Gruppe zusammengeschaltet sind, der ein Strombegrenzer zugeordnet ist und in der die LEDs dieser Gruppe gemeinsam mit elektrischer Energie versorgbar sind, dadurch gekennzeichnet, dass zum Betrieb mit einer ersten Spannung die Leiterbahnen identische und antiparallel vom Strom durchflossene Gruppen schaffend angeordnet sind, und dass zwei Leiterbahnen wahlweise mittels einer Brücke verbindbar sind, derart, dass in Reihe geschaltete Gruppen von LEDs geschaffen sind und in der gebrückten Schaltungsanordnung die Beleuchtungseinrichtung mit einer zweiten Spannung betreibbar ist, die höher ist als die erste Spannung.

Es handelt sich bei diesem Aufbau nicht um Endlos-Konstantspannungs-LED-Streifen bzw. LED-Band (SELV) mit flexiblem Träger und darauf angeordneten seriell angeordneten und voneinander trennbaren parallel geschalteten Lichterzeugermodulen, bei dem einerseits beliebige Module oder Modulgruppen an einer Durchschnittsstelle abgetrennt werden können, um verschiedene Baulängen von Beleuchtungsstreifen herstellen zu können, bei denen jeder Durchschnittsstelle eine markierte Verbindungsschnittstelle zugeordnet ist, an der die externe Spannungsversorgung des jeweils ersten Moduls unterbrechbar oder herstellbar ist. Ausserdem fehlt diesem bekannten Aufbau eine Vorrichtung zur Stromregelung der LED's, was dazu führen kann, dass LED's, die von der Versorgungsspannung weiter entfernt liegen, eine andere Lichtleistung abgeben als weiter vorn liegende LED's.

Demgegenüber stellt sich die Erfindung die Aufgabe, einen Endlos-Konstantspannungs-LED-Streifen (SLEV) zu schaffen, von dem beliebige Längen (Gruppen) von Lichterzeugermodulen abgetrennt werden können und bei denen unabhängig von der Länge (Anzahl der Lichterzeugermodule) gleiche Lichtleistung auf jedem Modul stattfindet, die mit einfachen Mitteln nach dem Abtrennen der Lichterzeugermodule vom Endlosstreifen eingestellt werden kann.

Die FR3048056 (A1) - «RUBAN LUMINEUX A DIODES ELECTROLUMINESCENTES » betrifft einen Lichtstreifen mit Leuchtdioden, die in einem vorbestimmten Abstand und gemäß einer freien Länge geschnitten werden kann, so das verschiedene Längen mit Lichterzeugermodulen geschaffen werden können. Die einzelnen Module werden jeweils mittels elektronischem Stromregler versorgt, so dass auch nachfolgende Lichterzeugermodule gleichartiges Licht erzeugen können, wie vorangehende Lichterzeugermodule. Zur Einstellung befinden sich in den Modulen auf verschiedenen Ebenen Leiterbahnen sowie an verschiedenen Stellen auch Unterbrechungen dieser Leiterbahnen, die je Modul willkürlich geschlossen werden können, um für jedes Modul unterschiedliche Eigenschaften zu erzielen. Das bedeutet, dass ein Elektroinstallateur, der über die gesamte Länge des abgeschnittenen Streifens eine bestimmte Lichtleistung auswählen möchte, diese Auswahl durch Manipulation in jedem einzelnen Modul des abgeschnitten Streifens vornehmen muss. Misslingt diese Massnahme an einer einzigen Stelle, ist der gewünschte Effekt über die gesamte Länge des abgeschnittenen Streifens nicht erzielbar. Zudem befinden sich die Unterbrechungen bzw. Überbrückungsstellen mitten im Modul, so dass allfällige Einstellungen vor der Montage des Streifens in einem Lampenkörper odgl. vorgenommen werden müssen, da nach deren Montage ein Zugang zu diesen Stellen oftmals nicht mehr möglich ist.

Demgegenüber stellt sich die Erfindung die Aufgabe, einen Endlos-Konstantspannungs-LED-Streifen (SLEV) zu schaffen, von dem beliebige Längen (Gruppen) von Lichterzeugermodulen (kurz: Modul) abgetrennt werden können und bei denen unabhängig von der Länge (Anzahl der Lichterzeugermodule) gleiche Lichtleistung auf jedem Modul stattfindet, die mit einfachen Mitteln nach dem Abtrennen der Lichterzeugermodule vom Endlosstreifen eingestellt werden kann und zwar auch dann, wenn der ein abgeschnittenes Stück dieses Streifens bereits in einem Lampenkörper montiert ist und daher der Zugang zu Bereichen mitten im Lichterzeugermodul nicht mehr gegeben ist. Ausserdem soll durch die Erfindung erreicht werden, dass nur an dem ersten Lichterzeugermodul eines abgeschnittenen Streifens eine Einstellung vorgenommen werden muss, um dadurch gleichzeig auch in allen nachfolgenden nicht abgetrennten Lichterzeugermodulen die gleiche Lichtleistung einzustellen.

Die EP3334263 (A1) - "PRINTED CIRCUIT BOARD, CORRESPONDING LIGHTING MODULE, LIGHTING SYSTEM AND METHOD FOR IMPLEMENTING LIGHTING MODULES" betrifft Leiterplatten für Beleuchtungsmodule und entsprechende Beleuchtungsmodule. Es handelt sich dabei nicht um endlos trennbare Konstantspannungs-LED-Streifen (SELV).

Demgegenüber stellt sich die Erfindung die Aufgabe, einen Endlos-Konstantspannungs-LED-Streifen (SLEV) zu schaffen, von dem beliebige Längen (Gruppen) von Lichterzeugermodulen abgetrennt werden können und bei denen unabhängig von der Länge (Anzahl der Lichterzeugermodule) gleiche Lichtleistung auf jedem Modul stattfindet, die mit einfachen Mitteln nach dem Abtrennen der Lichterzeugermodule vom Endlosstreifen eingestellt werden kann. Ausserdem sollen die abgetrennten Streifen am jeweiligen Anfang des abgetrennten Streifens für die gesamte Länge des abgetrennten Streifens hinsichtlich der Lichtleistung einstellbar sein.

Die WO2008112284 (A1) - «PERIMETER LIGHTING» betrifft eine Perimeter- oder Randbeleuchtung für Gebäude und insbesondere die Perimeter- oder Randbeleuchtung unter Verwendung von Leuchtdioden als Lichtquelle. Sie ist vergleichbar der EP3334263 aus diskreten Leiterplatten aufgebaut und bietet keine Lehre für den Fachmann, wie Endlos-Konstantspannungs-LED-Streifen (SLEV) zu gestalten sind, die auf unterschiedliche Längen abtrennbar sein sollen und über eine einfache Möglichkeit zur Einstellung der Lichtleistung über die ganze Länge des abgetrennten Streifens einzustellen. Offensichtlich werden in diesem Dokument jedoch - wie an sich bekannt - Widerstände benutzt, um Stromregler für die LED's in ihrer Leistung zu steuern. Änderungen in der gewünschten Lichtleistung würden jedoch ein Auswechseln der Widerstände in jedem einzelnen Modul erforderlich machen. Das ist bei Leiterplatten möglich, jedoch nicht bei flexiblen endlos-Konstantspannungs-LED-Streifen (SLEV) mit flexiblem Träger.

Der Fachmann würde daher nicht von dieser Lehre ausgehen.

Die EP3290787 (A1) - A LIGHTING DEVICE AND CORRESPONDING METHOD betrifft LED Beleuchtungsmodule, die jeweils angepasst werden, um eine bestimmte Lichtleistung zu ermöglichen. Um das zu erreichen, werden für jedes Lichterzeugermodul zuschaltbare Widerstände vorgesehen zu gewährleisten. Das ist aufwendig und erfordert Geschicklichkeit sowie bei längeren Streifen mehrfaches Handeln. Zudem ist auch bei diesem Aufbau ein nachträgliches Ändern der eingestellten Lichtleistung nachdem der Streifen bereits in einem Beleuchtungskörper eingebaut ist nicht mehr möglich, da die Stellen für das Zuschalten der Widerstände u.U. nicht mehr zugänglich sind. Dieser Stand der Technik betrifft keine abtrennbaren Endlos-Konstantspannungs-LED-Streifen (SELV) und bietet es dem Fachmann daher keine Basis für eine Weiterentwicklung solcher Streifen.

Gemäss der Erfindung weist ein Konstantspannungs-LED-Streifen (SELV) gegenüber dem Stand der Technik neu neben der Durchschnittsstelle wenigstens eine der Eingangs- und Ausgangsanschlussbahnen wenigstens eine markierte Verbindungsschnittstelle auf, die sich von den bisher bekannten Durchschnittsstellen dadurch unterscheidet, dass an ihr die Spannungsversorgung in das Netz unterbrechbar oder herstellbar ist.

Die Markierung ist ein technisch erforderliches Element, um es den Leuchtenherstellern oder Anwendern zu ermöglichen, die Schnittstelle zu identifizieren. Eine Markierung im Sinne der Erfindung ist jede Massnahme im Bereich der Eingangs- und Ausgangsanschlussbahnen, die es dem Monteur ermöglicht, die Schnittstelle zu erkennen, zu schliessen oder zu öffnen - beispielsweise mittels Lötvorgang oder mittels Montage eines entsprechend ausgebildeten Steckers.

Somit kann nun durch einen Leuchtenhersteller nicht nur zwischen Lichterzeugermodulen mechanisch getrennt werden (wie bisher, um die Länge der LED-Streifen an den Längenbedarf in der Leuchte anzupassen), sondern kann auch dort durch schaltungstechnische Massnahmen bewirkt werden, dass nachfolgende Lichterzeugermodule mit Spannung versorgt werden oder nicht. Dies ist im Falle von Lötbrücken oder von Klemmsteckern auch umkehrbar. Das bedeutet, dass einmal gewählte Einstellungen später wieder geändert werden können.

Daraus ergibt sich ein universellerer Einsatz von solchen SELV's, indem für jedes Lichterzeugermodul - auch im nicht durchtrennten Zustand - die Spannungsversorgung durch Manipulation an den markierten Verbindungsschnittstellen hergestellt oder getrennt werden kann.

Das findet z. B. dort Anwendung, wo man von einer Seite der SELV's in einem Beleuchtungskörper mit einer ersten Versorgungsspannung in den SELV einspeist und von der anderen Seite der SELV mit einer zweiten Versorgungsspannung (gegenläufig) einspeisen möchte, um z. B. Spannungsabfälle über die Länge des eingesetzten SELV's zu vermeiden oder um mittlere Lichterzeugermodule ohne Lichtstromerzeugung zu belassen, da periphere an die mittleren links und rechts angrenzende Lichterzeugermodule zunächst genügend gewünschten Lichtstrom erzeugen.

Es wird zum besseren Verständnis auf das Datenblatt 12/18-LED307-14 von der Firma Tridonic GmbH & Co KG verweisen, bei dem dargestellt ist, dass je nach Länge von SELV-Ketten und gewünschtem relativem Lichtstrom dieser aufgrund der Leitungsverluste abnimmt. So nimmt z. B. bei einem gewählten Lichtstrom von 1200 Im bei einer Länge von 6 m der relative Lichtstrom ab. Bei einem relativen Lichtstrom von 1800 Im erfolgt dieser Effekt bereits bei einer Länge von 4 m und bei einem relativen Lichtstrom von 2500 Im bei einer Länge von 2.4 m. Nur bei einem Lichtstrom von nur 600 Im ergibt sich eine Kettenlänge von fast 10 m.

Durch die Erfindung können diese Längen gewissermassen verdoppelt werden, indem beidseitig einer Kette von Lichterzeugermodulen eingespeist wird und in der Mitte der Kette die Eingangsanschlussbahnen getrennt werden. Wünscht man später jedoch den relativen Lichtstrom abzusenken, stellt man die Verbindung wieder her und beendet die Einspeisung von der anderen Seite. Somit ist erfindungsgemäss bei ein und demselben SELV eine Variation der Lichtströme möglich.

Ebenso findet das Anwendung, wo man bei einem bereits installierten Beleuchtungskörper willkürlich weitere Lichterzeugermodule (die bisher nicht unter Spannung waren) später hinzuschalten möchte (jeweils vom ersten Lichterzeugermodul in Richtung des letzten Lichterzeugermoduls des selben SLEV's) oder wegschalten (jeweils vom letzten Lichterzeugermodul des SLEV's in Richtung Spannungsversorgung), ohne die Grundstruktur des SELV's oder des Beleuchtungskörpers zu zerstören (Im Falle des Wegschaltens z. B. durch Durchschneiden des Streifens, was bisher als Möglichkeit zur Verfügung stand.)

Aufgrund der neuen markierten Verbindungsschnittstelle ergibt sich somit eine deutliche Reduktion von Lagerbedarf an SELV's - damit verbunden von Lagerkaptial, Lagerplatz, Materialabschreib, welcher bei nicht mehr verwendetem Material alter Generationen entsteht. Denn SELV's werden gegenwärtig ca. einmal pro Jahr mit einem Update versehen. So können bei einem Generationenwechsel schneller die Lager abverkauft/abgebaut werden und rascher die jeweils neue Generation eingeführt werden.

Vorzugsweise weist wenigstens eine der die Eingangs- und Ausgangsanschlussbahnen - durch die markierte Verbindungsschnittstelle getrennt - einen Primärteil und einen Sekundärteil auf, wobei der Primärteil die Durchschnittsstelle(n) aufweist und der Sekundärteil mit dem durchgeschleiften Netz des SLEV's verbunden ist. Jeder Sekundärteil einer Eingangs- und Ausgangsanschlussbahn ist elektrisch mit dem Netz des ersten Lichterzeugermoduls und jedem nachfolgenden Lichterzeugermoduls verbunden, insbesondere indem jeder Sekundärteil elektrisch jeweils mit jedem ihm gleichartigen Sekundärteil des nachfolgenden Lichterzeugermoduls verbunden ist. Im Falle einer hergestellten oder belassenen Verbindung zwischen einem Primär- und einem Sekundärteil einer Eingangs- und Ausgangsanschlussbahn ist die Sekundärseite jeder nachfolgenden Eingangs- und Ausgangsanschlussbahn aufs gleiche elektrische Potential gelegt wie die Sekundärseite der zugeordneten Eingangsanschlussbahn des vorhergehenden Lichterzeugermoduls.

Durch die Auftrennung in Primär- und Sekundärteil bei gleichzeitiger Verbindung der Netze zu den jeweiligen Sekundärteilen ermöglicht das automatische Durchschleifen von einer eingangs gewählten Anschlussvariante auf alle nachfolgenden Lichterzeugermodule. Man kann somit durch eine einmalige Beschaltung am Anfang einer Reihe von Lichterzeugermodulen durch eine Lötbrücke (oder Entfernen einer solchen) oder durch einen entsprechend ausgebildeten Stecker (oder Schalter) mit vorkonfektioniertem Kabel für alle Lichterzeugermodule eine definierte V-Spannungsversorgung auswählen, die somit bei jeder elektronischen Schaltung die gleiche Bestromung der LED's und damit die gleiche Lichtleistung bewirkt.

Mit anderen Worten: Die Lichtleistung des gesamten (beliebig langen) Konstantspannungs-LED-Streifen (SELV) kann durch eine einfache Lötung oder Klemmung oder Entfernung einer Leiterbahn oder eines Klemmsteckers an den Eingangs- und Ausgangsanschlussbahnen durchgängig eingestellt werden, ohne die einzelnen elektronischen Steuerungen selbst zu manipulieren.

Bei einer Verdrahtung mit Stecker können diese konfiguriert bestellbar sein oder sie können konfigurierbar ausgeführt sein, so dass der Leuchtenhersteller einen Universalstecker selbst konfiguriert, um eine gewünschte Auswahl der Eingangs- bzw. Ausgangsanschlussbahnen vorzunehmen. Demgegenüber ist Löten oder Entlöten sehr einfach und in jedem Betriebsumfeld anwendbar und unabhängig von einer Steckerlieferung.

Anstelle der unterschiedlichen Lötbrücken/-pads zur "Umschaltung" könnte im Rahmen der Erfindung - wie schon oben erwähnt - auch ein Drehschalter oder Druckschalter auf der Eingangsanschlussbahn des jeweils ersten Lichterzeugermoduls montiert werden, der es (später sogar dem Benutzer und nicht nur dem Elektriker bzw. Leuchtenhersteller) erlaubt, zwischen den unterschiedlichen Leistungsstufen umzuschalten. Im Schutzumfang ist dementsprechend auch ein solcher Aufbau umfasst, bei dem anstelle von entfernbaren oder hinzufügbaren Lötbrücken ein Umschalter vorgesehen ist, der das Auswählen oder Aufheben von elektrischen Verbindungen gestattet.

Dabei ist jedoch zu beachten, dass der SELV auf eben den genannten 50 m-Rollen (oder 5 m-Rollen) gelagert wird. Der Durchschneidabstand ist typischerweise zwischen 30 und 100 mm.

Weiter ist zu beachten, dass der Platz auf dem SELV sehr bescheiden ist. Der LED-Streifen soll nämlich bei einem minimalen Profil mittels opaler Abdeckung (z. B. B x H = 16 x 12 mm) ein homogenes Lichtbild erwirken.

Somit ist das Wichtige an dieser Weiterentwicklung der Erfindung, dass, obwohl man das LED-Band wie bisher mit der Schere durchschneiden kann und obwohl die nachfolgenden Eingangs- und Ausgangsanschlussbahnen gegebenenfalls an den markierten Schnittstellen getrennt sind, man nur einmal am Anfang jeder Lichterzeugermodulketten die gewünschte Lichtleistung aller nachfolgenden Lichterzeugermodule einstellen kann. Dies erfolgt möglichst in einem Arbeitsschritt, welcher ohnedies jedes Mal beim Anschliessen der Spannungsversorgung am SELV erfolgt und somit jeweils ohnedies einmal (wie bisher) gemacht werden muss, nämlich wie z. B. mittels Lötens oder Klemmens.

Daraus folgt vorteilhafterweise, dass es zur Lagerhaltung lediglich gleichartige Konstantspannungs-LED-Streifen (SELV) benötigt, die in ihrer Funktion jeweils durch einen einfachen Handgriff beliebig eingestellt werden können.

Bevorzugt wird die markierte Verbindungsschnittstelle durch einen wegschabbare Leiterbrücke oder durch eine Unterbrechung einer Eingangs- oder Ausgangsanschlussbahn - insbesondere zwischen dem Primärteil und dem Sekundärteil - gebildet. Die Art der Markierung spielt im Rahmen der Erfindung keine Rolle. Es kann dies ein aufgebrachter oder fehlender Lack oder eine Farbe sein, eine Markierung am Grundmaterial des SELV's (Plastik) oder auch eine taktile Markierung, die aus einer Erhöhung oder Vertiefung des Leiterbahnenmaterials der Anschlussbahnen o.dgl. besteht. Dabei kann die Markierung auf der Anschlussbahn oder unterhalb derselben oder seitlich derselben angebracht sein.

Weiter bevorzugt ist/sind die Leiterbrücke und oder die Eingangs- oder Ausgangsanschlussbahnen aus Lötzinn oder einem gut lötbaren Material bzw. als Lötpads ausgebildet.

Bei den erfindungsgemässen Lichterzeugermodulen können (wie an sich bekannt) zwei Eingangs- und Ausgangsanschlussbahnen zum Anschliessen des Netzes bzw. der Netze an eine Versorgungsspannung vorgesehen sein, von denen je eine für den V+ -Anschluss und die jeweils andere für den V- -Anschluss dient.

Gemäss einer Weiterbildung der Erfindung können wenigstens drei Eingangs- und Ausgangsanschlussbahnen zum Anschliessen des Netzes an eine Versorgungsspannung vorgesehen sein, von denen je eine für den V+ -Anschluss und die jeweils wenigstens beiden anderen für den V- -Anschluss (oder umgekehrt) von wenigstens zwei getrennten Netzen in jedem Lichterzeugermodul dient, wobei jedes der wenigstens beiden Netze mit der elektronische Steuerung so verbunden ist, dass diese die LED's je nach gewählter Spannungsbelegung der Netze unterschiedlich bestromt.

Damit ist gemeint, dass bei Belegung eines bestimmten der wenigstens beiden Netze durch die elektronische Steuerung im Betriebszustand in die LED's ein bestimmter Strom eingespeist wird, bei Belegung des anderen Netzes ein bestimmter anderer Strom eingespeist wird und gegebenenfalls bei Belegung von beiden Netzen mit Spannung ein dritter Strom in die LED's eingespeist wird. Der V+ -Anschluss bleibt diesbezüglich unverändert, da er vorzugsweise für alle wenigstens zwei Netze als V+ -Anschluss verwendet wird. Im Falle einer umgekehrten Auslegung, ist es der V+ -Anschluss der variiert, während der V- -Anschluss unverändert bleibt.

Selbstverständlich könnten auch die V+ -Anschlüsse für jedes Netz separat gewählt werden (also für jedes Netz ein eigener V+ -Anschluss), wobei dadurch die Anzahl der Leitung auf dem SELV erhöht würden (oder umgekehrt).

Alternativ zu dieser Darstellung mit den unterschiedlichen Netzen kann elektrisch auch von einem Aufbau mit nur einem Netz gesprochen werden, das jedoch unterschiedliche Signalpfade für V- aufweist, an denen gegebenenfalls gleiche V- - Werte oder auch unterschiedliche V- -Werte anlegbar sind (oder im umgekehrten Aufbau unterschiedliche V+ -Werte).

Entscheidend für diese Weiterbildung der Erfindung ist nicht die Höhe der V-(Signal)-Spannung, sondern dass jede elektronisch Steuerung jedes ersten Lichterzeugermoduls eine durch sie eindeutig auswertbare (Spannungs)-Information erhält, die es ihr ermöglicht, die jeweils dieser (Signal)-Spannung oder diesen (Signal)-Spannungen zugeordnete Bestromung der LED's des ersten Lichterzeugermoduls vorzunehmen (im umgekehrten Fall wäre es die V+ -(Signal)-Spannung.)

Gemäss der bevorzugten Ausbildung der Erfindung, dass jeder Sekundärteil einer Eingangsanschlussbahn elektrisch mit dem Netz des ersten Lichterzeugermoduls und jedem dazwischenliegenden Lichterzeugermoduls verbunden ist oder elektrisch anders ausgedrückt, dass jede V- -Signalbelegung einer bestimmten Eingangsanschlussbahn an dessen Sekundärteil durchgeschleift ist zum Sekundärteil der Eingangsanschlussbahn des nachfolgenden Lichterzeugermoduls, ergibt sich der überraschende Effekt, dass durch Definition der gewünschten Bestromung am ersten Lichterzeugermodul automatisch ohne weitere Massnahmen auch alle weiteren Lichterzeugermodule im Betriebszustand die gleicher Bestromung aufweisen.

Das bedeutet andererseits, dass es möglich ist, mit ein und demselben erfindungsgemäss aufgebauten SELV unterschiedliche Lichtleistungen auf allen Lichterzeugermodulen einzustellen, indem lediglich geringfügige Manipulationen an den ersten Eingangs- und Ausgangsanschlussbahnen vorgenommen werden.

Selbstverständlich kann der Fachmann ausgehend von dieser Lehre, auch Mischbelegungen vornehmen, indem er z. B. die ersten beiden Lichterzeugermodule mit einer bestimmten Bestromung definiert und durch Umlöten an den Eingangs- bzw. Ausgangsanschlussbahnen des nachfolgenden Lichterzeugermoduls für dieses und die nachfolgenden unterschiedliche Bestromung definiert. Der Flexibilität sind somit erfindungsgemäss keine Grenzen gesetzt.

Die elektronische Steuerung ist bei dieser Ausbildung somit so aufgebaut, dass sie in jedem Lichterzeugermodul mit allen Netzen verbunden ist (bzw. mit allen V-n-Signalpfaden oder umgekehrt mit allen V+ -Signalpfaden verbunden ist), jedoch selektiv je nach Auswahl des Netzes bzw. der Signalpfade durch Auswahl (Belegung oder Öffnung) der jeweiligen Verbindungsschnittstelle eine Auswahl der gewünschten Bestromung der LED's ermöglicht, so dass die gleichen LED's je nach vorgenommener Netzwahl bzw. Signalspannungspfadwahl eine bestimmte - somit netzabhängige bzw. V- -Signalspannungspfad-abhängige - Lichtleistung abgeben.

Ob innerhalb der elektronischen Steuerung dieses durch diskreten Schaltungsaufbau oder durch Software gelöst ist, bleibt der handwerklichen Ausgestaltung der SELV's bzw. der elektronischen Steuerung überlassen und ist nicht Gegenstand der Basis-Erfindung.

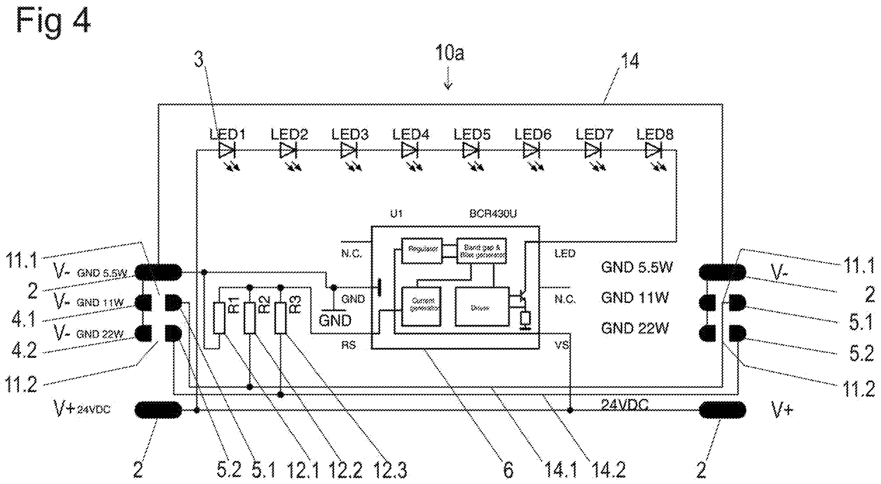

Ein konkret bevorzugter Ausführungsvorschlag, wie er nachfolgend im Zusammenhang mit der Figurenbeschreibung der Figs. 4-6 nochmals beschrieben wird, ist sehr einfach, da innerhalb der oder an der elektronischen Steuerung aus jedem Netz bzw. von jedem V- -Signalspannungspfad ein eigener elektrischer Widerstand in Serie geschaltet ist, so dass über die Höhe des jeweiligen Widerstands oder über die Summe der parallel geschalteten Widerstände - im Falle von mehreren geschlossenen Verbindungsstellen-Kontakten - die Helligkeit (Leistung der LED's) definiert wird. Durch diese Massnahme können die elektronischen Steuerungen selbst wieder identisch für alle Lichterzeugermodule ausgebildet sein und es definiert lediglich die Spannungsbelegung an den entsprechenden Eingängen dieser Steuerungen, deren Tätigkeit hinsichtlich der Bestromung der ihnen zugeordneten LED's o.dgl..

Anstelle von Widerständen könnten hier erfindungsgemäss auch andere elektronische Bauteile eingesetzt werden, die der elektronischen Steuerung die erforderlichen Signale zur Stromsteuerung geben.

Eine bevorzugte konkrete Weiterbildung von oben angegebenen SELV's ergibt sich, wenn vier Eingangs- und Ausgangsanschlussbahnen zum Anschliessen des Netzes an eine Versorgungsspannung vorgesehen sind, von denen je eine für den V+ - Anschluss und die jeweils drei anderen für den V- -Anschluss von drei getrennten Netzen im Lichterzeugermodul bzw. in den Lichterzeugermodulen dient, wobei jedes der drei Netze mit der elektronischen Steuerung so verbunden ist, dass diese im Betriebszustand die LED's je nach Spannungsbelegung der Netze unterschiedlich bestromt und wobei der jeweilige Strom so gewählt ist, dass bei Nutzung des ersten Netzes von der wenigstens einen LED eine Lichtleistung von 600 Im abgebbar ist, bei Nutzung des zweiten Netzes von der wenigstens einen LED eine Lichtleistung von 1200 Im abgebbar ist, bei Nutzung des dritten Netzes eine Lichtleistung von der wenigstens einen LED eine Lichtleistung von wenigstens 1800 Im abgebbar ist und vorzugsweise bei einer Nutzung von allen drei Netzen gleichzeitig eine Lichtleistung von der wenigstens einen LED eine Lichtleistung von wenigstens 2400 Im abgebbar ist.

Wie die elektronische Steuerung und die LED's o.dgl. durch den Fachmann - nach Kenntnis der Erfindung - konkret auszulegen sind, dass sie den angegebenen Anforderungen entsprechen, ist handwerkliches Grundwissen des Fachmanns, so dass darauf hier nicht näher eingegangen werden muss.

Die Erfindung umfasst somit auch SELV's nach einem der vorhergehenden Aufbauten, bei denen mehr als ein Netz vorgesehen ist, wobei alle Netze einen gemeinsamen V+ -Pol besitzen, der an seinen Eingangs- und Ausgangsanschlussbahnen keine Verbindungsschnittstelle aufweist und lediglich die Eingangs- und Ausgangsanschlussbahn für die V- -Pole bzw. V- -Anschluss der einzelnen Netze je eine Verbindungsschnittstelle aufweisen.

Erfindungsgemässe SELV haben dabei bevorzugt im Auslieferungszustand alle Verbindungsschnittstellen verbunden und gestatten nach Bedarf durch Auskratzen oder Entlöten die Auftrennung. Alternativ sind im Auslieferungszustand alle Verbindungsschnittstellen offen und nach Bedarf durch Verlöten oder durch einen vorkonfigurierten Klemmstecker (oder Schalter) gegebenenfalls an einem konfektionierten Kabel verbindbar, der im geklemmten Zustand Abstände zwischen Anschlussbahnteilen überbrückt, wobei im Falle von Steckern oder Schaltern solche im Lieferzustand zum SELV beigegeben sind.

Selbstverständlich fallen unter den Patentschutz auch Klemmstecker oder Schalter oder vorkonfektioniertes Anschlusskabel gemäss obigen Angaben, die so ausgebildet sind, dass sie zur selektiven Überbrückung von markierten Verbindungsstellen gemäss einem der vorhergehenden Merkmale eingesetzt werden können.

Erleichtert wird für den Beleuchtungskörperkonfektionär, wenn gemäss einer Weiterbildung der Erfindung sowohl die Durchschnittsstellen, als auch die Verbindungsschnittstellen durch sichtbare oder spürbare Linien markiert sind, wobei die Linien vorzugsweise - zur leichteren Diskriminierung von Durchschnittsstellen und Verbindungsschnittstellen - erkennbar unterschiedlich ausgeführt sind.

Praktischerweise sind SELV mit mehr als zwei Eingangs- und Ausgangsanschlussbahnen im Rahmen der Erfindung so aufgebaut, dass eine Spannungsversorgung vorgesehen ist, die jeder Eingangs- und Ausgangsanschlussbahn, die nicht V+ darstellt, eine identische V- -Spannung zugeordnet ist, wobei vorzugsweise nachfolgend der Eingangs- und Ausgangsanschlussbahn je ein Widerstand in Serie geschaltet ist, so dass das V- - Potential bzw. V- -Spannungspotential gegenüber der elektronischen Steuerung im Falle eines Stromflusses um je einen bestimmten Wert absinkt, oder dass jeder Eingangs- und Ausgangsanschlussbahn, die nicht V+ darstellt, ein unterschiedliches V- -Spannungspotential zugeordnet ist, so dass jedes Netz mit einer unterschiedlichen Spannung belegbar ist, bzw. sodass die elektronische Steuerung durch jede Eingangs- und Ausgangsanschlussbahn, die nicht V+ (oder umgekehrt V-) darstellt, ein unterschiedliches V- -Spannungspotential zugeführt bekommt.

Ohne zu obigen Ausführungen einen nennenswerten elektrischen Auswirkungs-Unterschied anzugeben, ist durch den Schutzumfang der Patentansprüche auch umfasst, dass anstelle mehrere Netze nur ein einziges Netz durchgeschleift ist mit einem V+ und einem V- -Anschluss zur Spannungsversorgung aller Lichterzeugermodule und dass wenigstens eine zusätzliche elektrische Leitung verlegt ist, die einerseits zur elektronischen Steuerung verbindet und andererseits durchgeschleift ist von dem Sekundärteil einer ersten Eingangs- und Ausgangsanschlussbahn zu dem Sekundärteil der nachfolgenden Eingangs- und Ausgangsanschlussbahn des jeweils nachfolgenden Lichterzeugermoduls zum Anlegen wenigstens einer Steuerspannung, wobei die elektronische Steuerung so ausgelegt ist, dass sie bei Nichtanlegen der Steuerspannung/-en eine andere Bestromung der LED vornimmt, als beim Anlegen der Steuerspannung/-en.

Die zuletzt angegebene Variante wird weitergebildet, indem mehr als zwei zusätzliche elektrische Leitungen vorgesehen sind und/oder indem alle Steuerspannungen V+ oder V- sind.

Eine einfache, arbeitssparende Lösung/Weiterbildung ergibt sich, bei allen obigen Varianten, wenn die Primärseiten aller geteilten Anschlussbahnen auf dem gleichen Spannungspotential liegen bzw. verbunden sind.

Die Erfindung stellt auch ein Verfahren zur Auswahl einer bestimmten Leuchtstärken einer SELV unter Schutz, deren LED's durch Steuerung ihres Eingangsstroms zu unterschiedlichen Leuchtstärken angeregt werden können, bei dem ein SELV zur Verfügung gestellt wird, dass mehrere unterschiedliche Netze oder mehrere zusätzliche elektrische Leitungen zur Anspeisung oder zur Ansteuerung der elektronischen Steuerung aufweist, wobei jedem Netz oder jeder zusätzlichen Leitung innerhalb der elektronischen Steuerung ein bestimmter Bestromungswert für die LED zugeordnet ist, und dass das der gewünschten Auswahl entsprechende Netz oder entsprechende zusätzliche Leitung mit der Versorgungsspannung bzw. mit einer Steuerspannung belegbar gemacht wird, indem eine unterbrochene Zuleitung des entsprechenden Netzes bzw. der entsprechenden zusätzlichen Leitung mittels Lötbrücke oder mittels voreingestellten Klemmsteckers geschlossen wird.

Die Erfindung umfasst dabei abgesehen vom oben angegebenen noch die folgende zweite geringfügig unterschiedliche Variante - wobei allerdings die Merkmale der unterschiedlichen Varianten auch untereinander kombinierbar sind. Konstantspannungs-LED-Streifen aus einem ersten, einem nachfolgenden zweiten und nachfolgenden n-ten - seriell angeordneten und voneinander trennbaren - parallel geschalteten Lichterzeugermodul, mit jeweils einem ersten durchgeschleiften Netz für die eigene Stromversorgung jedes Lichterzeugermoduls und für die Stromversorgung jeder der nachfolgenden zweiten bzw. n-ten Lichterzeugermodule, wenigstens je eine LED (oder dergleichen) und wenigstens je eine elektronische Steuerung für diese LED, welche die LED im Betriebsfall bestromt, Eingangs- und Ausgangsanschlussbahnen zum Anschliessen des Netzes an eine Versorgungsspannung, wobei an jeder Eingangs- und Ausgangsanschlussbahn wenigstens je eine Durchschnittstelle zum Durchtrennen des Streifens zwischen zwei Lichterzeugermodulen mittels Schere o.dgl. vorgesehen sind, so dass jedes (getrennte) Lichterzeugermodul oder alle verbundenen Lichterzeugermodule bei Bedarf über seine Eingangs- und/oder Ausgangsanschlussbahnen (individuell) an eine Versorgungsspannung anschliessbar ist bzw. sind, wobei wenigstens eine der Eingangs- und Ausgangsanschlussbahnen wenigstens eine markierte Verbindungsschnittstelle aufweist, an der die Spannungsversorgung in das Netz unterbrechbar oder herstellbar ist. Zweckmässigerweise weist wenigstens eine der die Eingangs- und Ausgangsanschlussbahnen durch die markierte Verbindungsschnittstelle getrennt einen Primärteil und einen Sekundärteil auf, wobei der Primärteil die Durchschnittsstelle aufweist und der Sekundärteil mit dem durchgeschleiften Netz verbunden ist, wobei jeder Sekundärteil einer Eingangs- und Ausgangsanschlussbahn elektrisch mit dem Netz des ersten Lichterzeugermoduls und jedem nachfolgenden Lichterzeugermoduls verbunden ist, insbesondere indem jeder Sekundärteil elektrisch jeweils mit jedem ihm gleichartigen Sekundärteil des nachfolgenden Lichterzeugermoduls verbunden ist, so dass im Falle einer hergestellten oder belassenen Verbindung zwischen einem Primär- und einem Sekundärteil einer Eingangs- und Ausgangsanschlussbahn die Sekundärseite jeder nachfolgenden Eingangs- und Ausgangsanschlussbahn aufs gleiche elektrische Potential gelegt ist wie die Sekundärseite der zugeordneten Eingangsanschlussbahn.

Gemäss einer zweckmässigen Weiterbildung ist die markierte Verbindungsschnittstelle durch einen wegschabbare Leiterbrücke oder durch eine Unterbrechung einer Eingangs- oder Ausgangsanschlussbahn, insbesondere zwischen dem Primärteil und dem Sekundärteil gebildet.

Zweckmässigerweise sind die Leiterbrücke und oder die Eingangs- oder Ausgangsanschlussbahnen aus Lötzinn oder einem gut lötbaren Material bzw. als Lötpads ausgebildet.

Gemäss einer zweckmässigen Weiterbildung sind je Lichterzeugermodul zwei Eingangs- und Ausgangsanschlussbahnen zum Anschliessen des Netzes bzw. der Netze an eine Versorgungsspannung vorgesehen, von denen je eine für den V+ - Anschluss und die jeweils andere für den V- -Anschluss dient, oder es sind wenigstens drei Eingangs- und Ausgangsanschlussbahnen zum Anschliessen des Netzes an eine Versorgungsspannung vorgesehen, von denen je eine für den V+ - Anschluss und die jeweils wenigstens beiden anderen für den V- -Anschluss von wenigstens zwei getrennten Netzen in jedem Lichterzeugermodul dient, wobei jedes der wenigstens beiden Netze mit der elektronische Steuerung so verbunden ist, dass diese die LED's je nach Spannungsbelegung der Netze unterschiedlich bestromt.

Zweckmässigerweise sind vier Eingangs- und Ausgangsanschlussbahnen zum Anschliessen des Netzes an eine Versorgungsspannung vorgesehen, von denen je eine für den V+ -Anschluss und die jeweils drei anderen für den V- -Anschluss von drei getrennten Netzen im Lichterzeugermodul bzw. in den Lichterzeugermodulen dient, wobei jedes der drei Netze mit der elektronischen Steuerung so verbunden ist, dass diese im Betriebszustand die LEDs je nach Spannungsbelegung der Netze unterschiedlich bestromt und wobei der jeweilige Strom so gewählt ist, dass bei Nutzung des ersten Netzes von der wenigstens einen LED eine Lichtleistung von 600 Im abgebbar ist, bei Nutzung des zweiten Netzes von der wenigstens einen LED eine Lichtleistung von 1200 Im abgebbar ist, bei Nutzung des dritten Netzes eine Lichtleistung von der wenigstens einen LED eine Lichtleistung von wenigstens 1800 Im abgebbar ist und zweckmässigerweise bei einer Nutzung von allen drei Netzen gleichzeitig eine Lichtleistung von der wenigstens einen LED eine Lichtleistung von wenigstens 2400 Im abgebbar ist.

Gemäss einer zweckmässigen Weiterbildung ist mehr als ein Netz vorgesehen, wobei alle Netze einen gemeinsamen V+ -Pol besitzen, der an seinen Eingangs- und Ausgangs-Anschlussbahnen keine Verbindungsschnittstelle aufweist und lediglich die Eingangs- und Ausgangsanschlussbahn für die V- -Pole der einzelnen Netze je eine Verbindungsschnittstelle aufweisen.

Zweckmässigerweise sind im Auslieferungszustand des Konstantspannungs-LED-Streifens alle Verbindungsschnittstellen verbunden und nach Bedarf durch Auskratzen oder Entlöten trennbar, oder im Auslieferungszustand sind alle Verbindungsschnittstellen offen und nach Bedarf durch Verlöten oder durch einen vorkonfigurierten Klemmstecker gegebenenfalls an einem konfektionierten Kabel verbindbar, der im geklemmten Zustand Abstände zwischen Anschlussbahnteilen überbrückt, und dass solche Klemmstecker im Lieferzustand zum Konstantspannungs-LED-Streifen beigegeben sind.

Gemäss einer zweckmässigen Weiterbildung sind sowohl die Durchschnittsstellen als auch die Verbindungsschnittstellen durch sichtbare oder spürbare Linien markiert, wobei die Linien vorzugsweise - zur leichteren Diskriminierung von Durchschnittsstellen und Verbindungsschnittstellen - erkennbar unterschiedlich ausgeführt sind.

Gemäss einer zweckmässigen Weiterbildung ist eine Spannungsversorgung vorgesehen, die jeder Eingangs- und Ausgangsanschlussbahn, die nicht V+ darstellt, eine identische V- -Spannung zugeordnet ist, wobei vorzugsweise nachfolgend der Eingangs- und Ausgangsanschlussbahn je ein Widerstand in Serie geschaltet ist, so dass das V- -Potential gegenüber der elektronischen Steuerung im Falle eines Stromflusses um je einen bestimmten Wert absinkt, oder die jeder Eingangs- und Ausgangsanschlussbahn, die nicht V+ darstellt, ein unterschiedliches V- -Spannungspotential zugeordnet ist, so dass jedes Netz mit einer unterschiedlichen Spannung belegbar ist, bzw. sodass die elektronische Steuerung durch jede Eingangs- und Ausgangsanschlussbahn, die nicht V+ darstellt, ein unterschiedliches V- -Spannungspotential zugeführt bekommt.

Gemäss einer zweckmässigen Weiterbildung ist anstelle mehrere Netze nur ein einziges Netz durchgeschleift mit einem V+ und einem V- -Anschluss zur Spannungsversorgung aller Lichterzeugermodule und dass wenigstens eine zusätzliche elektrische Leitung verlegt ist, die einerseits zur elektronischen Steuerung verbindet und andererseits durchgeschleift ist von dem Sekundärteil einer ersten Eingangs- und Ausgangsanschlussbahn zu dem Sekundärteil der nachfolgenden Eingangs- und Ausgangsanschlussbahn des jeweils nachfolgenden Lichterzeugermoduls (10n) zum Anlegen wenigstens einer Steuerspannung, wobei die elektronische Steuerung so ausgelegt ist, dass sie bei Nichtanlegen der Steuerspannung/-en eine andere Bestromung der LED vornimmt, als beim Anlegen der Steuerspannung/-en.

Zweckmässigerweise sind mehr als zwei zusätzliche elektrische Leitungen vorgesehen und/oder dass alle Steuerspannungen V+ oder V-.

Zweckmässigerweise liegen die Primärseiten aller geteilten Eingangs- und Ausgangsanschlussbahnen auf dem gleichen Spannungspotential bzw. sind verbunden.

Weiter sind erfindungsgemäss Klemmstecker oder vorkonfektioniertes Anschlusskabel ausgebildet zur selektiven Überbrückung von markierten Verbindungsschnittstellen.

Weiter ist erfindungsgemäss ein Verfahren geschaffen zur Verwendung der oben angegebenen zweiten Variante (jedoch nicht eingeschränkt darauf. D.h. das Verfahren kann auch mit den nachfolgend angegebenen dritten und vierten Varianten eingesetzt werden), und zwar, zur Auswahl einer bestimmten Leuchtstärken eines Konstantspannungs-LED-Streifens, dessen LEDs durch Steuerung ihres Eingangsstroms zu unterschiedlichen Leuchtstärken angeregt werden können, wobei ein Konstantspannungs-LED-Streifens zur Verfügung gestellt wird, der mehrere unterschiedliche Netze oder mehrere zusätzliche elektrische Leitungen zur Anspeisung oder zur Ansteuerung der elektronischen Steuerung aufweist, wobei jedem Netz oder jeder zusätzlichen Leitung innerhalb der elektronischen Steuerung ein bestimmter Bestromungswert für die LED zugeordnet ist, und dass das der gewünschten Auswahl entsprechende Netz oder entsprechende zusätzliche Leitung mit der Versorgungsspannung bzw. mit einer Steuerspannung belegbar gemacht wird, indem eine unterbrochene Zuleitung des entsprechenden Netzes bzw. der entsprechenden zusätzlichen Leitung mittels Lötbrücke oder mittels voreingestellten Klemmsteckers geschlossen wird.

Eine Dritte Variante ergibt sich gemäss folgender Dritten Variante der Erfindung, bei der die elektronische Stromreglerschaltung jedes Moduls via vorgeschalteter Impedenzen/Widerständen unterschiedlich angesteuert werden können:
Dabei geht es um einen Konstantspannungs-LED umfassend
- mehrere, den LED-Streifen durch Modulaneinanderreihung ausbildende, voneinander trennbare Lichterzeugermodule, die jeweils umfassen:
   - LEDs,
   - eine elektronische Steuerung zur Bestromungsregelung der LEDs ,
   - wenigstens zwei Eingangs- und Ausgangsanschlussbahnen zur Stromversorgung des Lichterzeugermoduls, wobei jede der Eingangs- und Ausgangsanschlussbahnen mittels einer reversibel aufbringbaren Lotbrücke nach Art eines Schalters fungiert,
      - zur Vorgabe des Ausgangsstroms der elektronischen Stromregler-Steuerung, worüber die Lichtleistung der LEDs einstellbar ist, wenigstens zwei zueinander parallel schaltbare Widerstände, welche widerstandseingangsseitig mit der elektronischen Stromregler-Steuerung verschaltet sind,
      - wobei jeder Widerstand widerstandsausgangsseitig mit einer eigenen Eingangsanschlussbahn in Reihe geschaltet ist,
- wobei zur Einstellung der Lichtleistung der LEDs in allen nachfolgenden Modulen des LED-Streifens die Eingangsanschlussbahnen im ersten Lichterzeugermodul zu den Widerstandseingangsseiten des jeweils nachfolgenden Moduls durchgeschleift sind,
- so dass ein im Betriebszustand widerstandseingangsseitig anliegendes Spannungspotential automatisch auch eingangsseitig der Widerstände des jeweils nachfolgenden nicht abgetrennten Moduls anliegt.

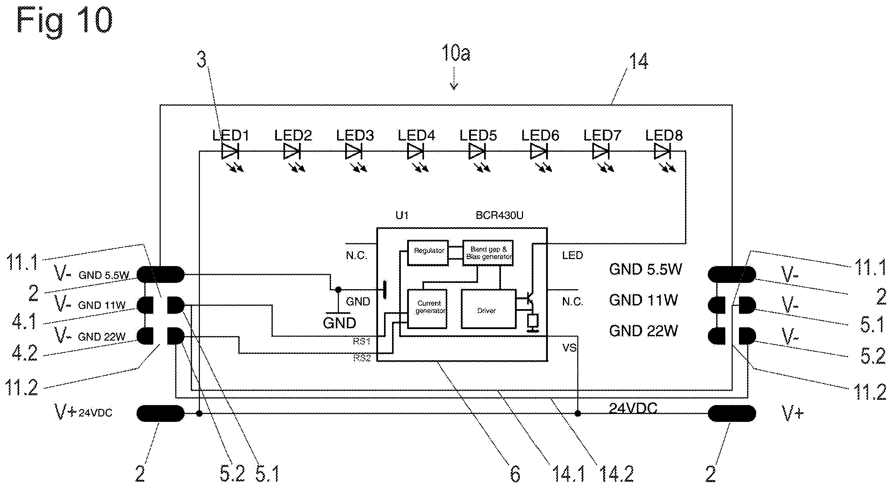

Diese 3. Variante umfasst Konstantspannungs-LED-Streifen umfassend
- Eingangs- und (Ausgangs)Anschlussbahnen zum Anschluss an die Spannungs/Stromversorgung
   - einen elektronischen Stromregler zur geregelten Bestromung von nachgeschalteten LED's und
- mehrere mit dem elektronischen Stromregler verschaltete (Stell)Widerstände zur Ansteuerung des Stromreglers für die Abgabe des Ausgangsstroms wobei jedem (Stell)Widerstand eine Eingangsanschlussbahn vorgeschaltet ist, die mittels einer reversibel aufbringbaren Lötbrücke nach Art eines Schalters fungiert, so dass durch Wahl der Lötbrücke(n) die Ansteuerung des Stromreglers bewerkstelligt wird. Diese Technik wird bei allen Ausführungsbeispielen der Figuren 4-9 angewendet.
Gegenüber dem Bekannten gestatten solche Aufbauten das einfache Einstellen einer gewünschten Leuchtstärke des LED-Streifens durch Anbringen oder Entfernen von Lötbrücken. Bei besonders ausgestalteten elektronischen Stromreglern kann diese Technik noch dadurch modifiziert werden, dass die Stromregler so aufgebaut sind, dass es keine externen Widerstände zur Ansteuerung benötigt, sondern dass lediglich verschiedene Signaleingänge vorgesehen sind, wie in Fig. 10 dargestellt ist.

Dort ist nicht ein bestimmter Impedanzwert ansteuernd, sondern ist für jede Lichtleistung eine eigene Signaleingangsbahn vorgesehen. Je nachdem welche dieser Bahnen angesteuert wird, führt dies zur gewählten Lichtleistung.

Diese widerstandsfreie Ansteuerung über geeignete Signaleingänge bei der elektronischen Stromregler-Schaltung, wie in Fig. 10 dargestellt, trifft bei Bedarf alle Ausführungsformen der Erfindung, indem dort anstelle der durch externe Widerstände regelbare elektronische Stromregler ein solcher eingesetzt wird, der mittels unterschiedlichen Signalbahnen angesteuert werden kann. Alle erfindungsgemässen Ausführungsformen können somit sowohl mit widerstandsangesteuerten oder mit signaleingangsbahnengesteuerten Stromreglern ausgeführt sein.

Insbesondere bei den Ausführungsformen gemäss Anspruch 1 und der Weiterbildungen gemäss den davon abhängigen Ansprüchen können erfindungsgemäss auch mit dem Aufbau gemäss Fig.10 ausgestattet werden.

Wie sich insbesondere Aus den Figuren 4 und 6-9 mit anderen Worten ergibt, umfasst die Erfindung auch einen trennbaren Konstantspannungs-LED-Streifen mit mehreren als Segemente aufgebauten Lichterzeugermodulen, wobei jedes Segment je wenigstens eine Stromreglerschaltung aufweist, deren Ausgangsstrom über einen externen Widerstand vorgebbar ist, welcher an einen entsprechenden Eingang der Stromreglerschaltung angeschlossen ist, wobei die Vorgabe dadurch erfindungsgemäss wählbar ist, indem mehrere Widerstände am Eingang der Stromreglerschaltung angeschlossen sind, die anderenends einzeln oder zusammen mittels Überbrückung einer unterbrochenen Spannungs-Zuleitung an eine Eingangsspannung anlegbar ist.

Dieser trennbare Konstantspannungs-LED-Streifen wird dadurch erfindungsgemäss noch weiter verbessert, dass jede Andernends-Seite jedes Widerstands zu jeder korrespondierenden Andernends-Seite jedes korrespondierenden Widerstands des nachfolgenden Segments bzw. Lichterzeugermodul durchgeschleift ist. Durch diese Massnahme ist bewerkstelligt, dass jedes nachfolgende Segment/Lichterzeugermodul an seiner Stromreglerschaltung automatisch den gleichen Widerstandswert zur Vorgabe des Ausgangsstroms dieser Stromreglerschaltung aufweist wie das jeweils vorher liegende Segment/Lichterzeugermodul. Damit ist sichergestellt, dass durch einmalige Definition des Ausgangsstroms an der Stromreglerschaltung des ersten Segments/Lichterzeugermoduls für alle nachfolgenden verbundenen Segmente/Lichterzeugermodule ebenso der Ausgangsstrom auf den gleichen Wert definiert ist. Dies hat zur Folge, dass die ganze Reihe von Segmenten/Lichterzeugermoduleauf jedem Segment/Lichterzeugermodul verfügt. Damit ist die Aufgabe gelöst, durch eine einfache Handlung am ersten Segment/Lichterzeugermodul eine beliebig lange Kette von Segmenten/Lichterzeugemodulen mit einer bestimmten Lichtleistung festzulegen. Das erfüllt die Aufgabe, mit einem einzigen Rohmaterial (eine Type von trennbaren Endlos-Konstantspannungs-LED-Streifen) Leuchten mit unterschiedlicher Lichtleistung (z.B. Lichtfarbe oder Lichthelligkeit) ausgestalten zu können.

Mit anderen Worten: die Lagerhaltung, das Bestellwesen, die Liefervorgänge und letztlich auch die Herstellungsprozesse beim Leuchtenhersteller reduziert sich auf einen einzigen trennbaren Endlos-Konstantspannungs-LED-Streifen. Je nach Bedarf kann er dann problemlos die jeweils gewünschte Lichtleistung auswählen und einstellen.

Bei Bedarf kann man das sogar später wieder Rückgängig machen, indem die Lötbrücke entfernt und an anderer Stelle neu gesetzt wird. Ebenso kann der Fachmann bei Bedarf über die Länge des trennbaren Endlos-Konstantspannungs-LED-Streifen auch unterschiedliche Lichtleistungen pro Segment einstellen, indem er bei nachfolgenden Segmenten/Lichterzeugermodulen die Leitungen für die die durchgeschleiften Andernends-Seiten unterbricht und gleichzeitig an dem ersten nachfolgenden Segment an dem die Änderung wirksam sein soll, neue Lötbrücken bewusst anders setzt.

Eine vierte Variante der Erfindung ergibt sich wie folgt:
Erfindungsgemäss wird ein Konstantspannungs-LED-Streifen geschaffen, welcher mehrere, den LED-Streifen durch Modulaneinanderreihung ausbildende, voneinander trennbare Lichterzeugermodule aufweist, die jeweils umfassen: LEDs, eine elektronische Steuerung zur Bestromung der LEDs, wenigstens zwei Eingangs- und Ausgangsanschlussbahnen mit Verbindungsschnittstellen zur Stromversorgung des jeweiligen Lichterzeugermoduls, und wenigstens zwei Leitungsbahnen, welche jeweils die elektronische Steuerung und eine der Eingangs- und
Ausgangsanschlussbahnen verbinden, wobei die Eingangs- und
Ausgangsanschlussbahnen im ersten Lichterzeugermodul zu den Eingangs- und
Ausgangsanschlussbahnen des jeweils nachfolgenden Moduls durchgeschleift sind, so dass ein im Betriebszustand an den Eingangs- und Ausgangsanschlussbahnen des ersten Lichterzeugermoduls anliegendes Spannungspotential auch an den Eingangs- und Ausgangsanschlussbahnen des jeweils nachfolgenden Moduls anliegt, wobei zur Einstellung der Lichtleistung der LEDs in allen Modulen das im Betriebszustand an den Eingangs- und Ausgangsanschlussbahnen des ersten Lichterzeugermoduls anliegende Spannungspotential durch Öffnung bzw. Schliessen der Verbindungsschnittstellen der Eingangs- und Ausgangsanschlussbahnen im ersten Modul einstellbar ist.

Zweckmässigerweise unterteilt die Verbindungsschnittstelle die Eingangs- und Ausgangsanschlussbahnen jeweils in einen Primärteil und einen Sekundärteil unterteilt, wobei der Primärteil und der Sekundärteil voneinander elektrisch isoliert sind, wenn sich die Verbindungsschnittstelle in einem offenen Zustand befindet und wobei der Primärteil und der Sekundärteil elektrisch leitend verbunden sind, wenn sich die Verbindungsschnittstelle in einem geschlossenen Zustand befindet.

Gemäss zweckmässiger Weiterbildung kann die Verbindungsschnittstelle mittels einer reversibel aufbringbaren Lötbrücke oder eines Steges geschlossen werden.

Zweckmässigerweise sind im Auslieferungsmontage- und Betriebszustand des LED-Streifens und in allen Modulen alle Verbindungschnittstellen an den Eingangs- und Ausgangsanschlussbahnen offen und die Lichtleistung der LEDs ist gemäss dem Spannungspotential eingestellt, welches an den Verbindungschnittstellen losen Eingangs- und Ausgangsanschlussbahnen anliegt, die über die Leitungsbahn mit der elektronischen Steuerung verbunden sind.

Gemäss zweckmässiger Weiterbildung sind im Betriebszustand zur Veränderung der Lichtleistung der LEDs in allen Modulen eine oder beide der Verbindungschnittstellen an den Eingangs- und Ausgangsanschlussbahnen im ersten Modul schliessbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig.1: zeigt drei Lichterzeugermodule in einer Kette auf einem SELV mit vier Lötpads und einer elektronischen Steuerung, welche den Konstantstrom reguliert,
- Fig.2: stellt den gleichen Aufbau nach Fig.1 dar, welcher an eine Zuleitung angeschlossen ist, wobei mittels der Auswahl und Befestigung der Zuleitung eine Lötbrücke erstellt wird,
- Fig.3: zeigt den Bereich der unterbrochenen Eingangs- und Ausgangsanschlussbahnen vergrössert im Detail, wobei die Lötpad V-von den Lötpad "Brightness Control" getrennt sind,
- Fig.4: zeigt eine konkrete Ausgestaltung eines bevorzugten Ausführungsbeispiels eines SELV-Lichterzeugermoduls bei dem drei oder vier Lichtströme einstellbar sind,
- Fig.5: zeigt eine konkrete Ausgestaltung eines SELV's mit zwei Lichterzeugermodulen, bei denen pro Modul nur eine Lichtstromstärke oder keine auswählbar ist,
- Fig.6.: zeigt einen Aufbau ähnlich der Fig. 4 mit einer Beschaltung ähnlich wie Fig. 5 für das erste Lichterzeugungsmodul, jedoch mit einer erfindungsgemäss im Vergleich anderen Beschaltung für das zweite Lichterzeugermodul als in Fig. 5,
- Fig.7-9: zeigen je ein Ausführungsbeispiel ähnlich wie in den Figs. 4 und 6, bei denen jedoch jeweils unterschiedliche Lichtströme ausgewählt/eingestellt sind, nämlich Lichtstromsetting 1 in Fig. 7, Lichtstromsetting 2 in Fig. 8 und Lichtstromsetting 3 in Fig. 9,
- Fig.10: zeigt ein Ausführungsbeispiel eines SELVs mit einem Lichterzeugermodul, wobei aufgrund des Aufbaus der elektronischen Stromregler-Schaltung (6) drei unterschiedliche Lichtstromstärken ohne vorgeschaltete Widerstände auswählbar sind, und
- Fig.11: zeigt Bilder über SELV's aus dem Stand der Technik (der eingangs zitierten URL entnommen).

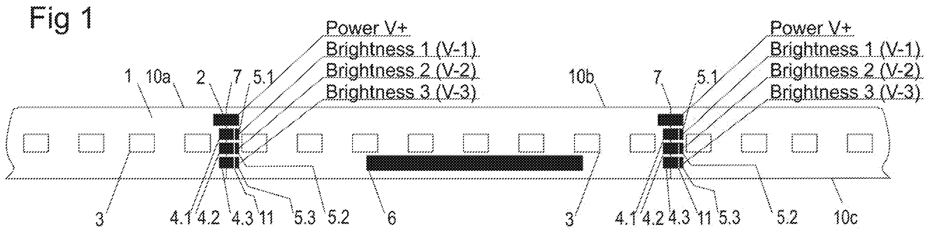

Fig. 1 zeigt drei Lichterzeugermodule 10a-10c in einer Kette auf einem SELV, der, wie an sich bekannt, zwischen je zwei Modulen 10 wenigstens eine Durchschnittsstelle 7 aufweist. Ebenso weist jedes Lichterzeugermodul 10a-10c, wie an sich bekannt, durchgängige Eingangs- und Ausgangsanschlussbahnen 2 auf. Sie sind im vorliegenden Beispiel V+ gewidmet. Symbolisch dargestellt sind LED's 3, die von einer elektronischen Steuerung 6 im Betriebsfall bestromt werden. Neu und erfinderisch befinden sich Eingangs- und Ausgangsanschlussbahnen 2, 4, 5 mit je einer zusätzlichen markierten Verbindungsschnittstelle 11, die - wie hier dargestellt - offen ist. Demzufolge gibt es bei diesem Ausführungsbeispiel gegenwärtig nur eine elektrische Leitung, die pro Lichterzeugungsmodul 10 belegt ist, nämlich jene bei 2 (V+). Ein solcher SELV kann kein Licht produzieren. Auch dann nicht, wenn beispielsweise an 4.1 (erste unterbrochene Eingangs- und Anschlussbahn) eine Spannung V- angelegt würde, weil diese wegen der Unterbrechung an der Verbindungsschnittstelle 11 nicht in das nachfolgende Lichterzeugungsmodul 10b oder 10c durchgeschleift wäre. Schliesst man jedoch diese Verbindungsschnittstelle 11 z. B. mittels Lötbrücke (hier nicht gezeigt), dann würde im Falle des Anliegens von V- das betreffende Lichterzeugermodul 10b oder 10c Licht erzeugen können und zwar mit dem Lichtstrom, den die elektronische Steuerung 6 bestromt, infolge der ihr zur Verfügung stehenden Spannungsinformation über den Anschluss 4.1 bzw. 5.1.

Gesetzt den Fall, dass die unterbrochenen Anschlussbahnen 4.2. und 4.3. bzw. deren Sekundärteile 5.2 und 5.3 der elektronischen Steuerung 6 andere Signale vermitteln, würde diese eine andere Bestromung vornehmen und demzufolge einen anderen Lichtstrom erzeugen.

Vereinfacht ausgedrückt: Durch die Erfindung wird eine Auswählbarkeit von Lichtströmen im Lichterzeugungsmodul 10a - 10c des SELV's gewährleistet, indem die elektronische Schaltung bestimmte - durch einfache Beschaltung - variierbare Signale erhält.

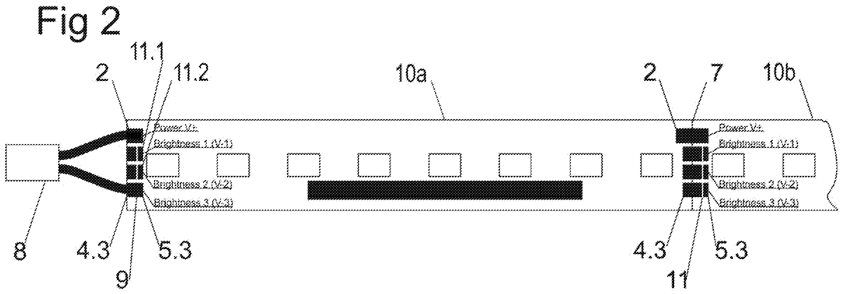

Fig. 2 stellt den gleichen Aufbau nach Fig.1 dar, bei dem jedoch die Anschlusssituation eines ersten Lichterzeugermoduls 10a gezeigt ist. Hier ist die unterbrochene Eingangsanschlussbahn 4.1 mittels Lötbrücke 9 zu ihrer Sekundärseite 5.3 geschlossen und sie ist mit einer Leitung 13 einer Spannungsversorgung 8 verbunden, die auch V+ zur durchgängigen Bahn 2 bringt.

Bei diesem Aufbau wird somit das Lichterzeugermodul 10a mit einer bestimmten Helligkeit leuchten, die durch die Helligkeitskontrolle an der Lötstelle 9 (4.3 - 9 - 5.3) in Verbindung mit deren Verbindung zur elektronischen Steuerung 6 definiert ist.

Da beim nachfolgenden Lichterzeugungsmodul 10b keine Lötbrücken vorgesehen sind, wird dieses finster bleiben, selbst dann, wenn wie standardmässig vorgesehen, 4.3. bzw. 5.3 mit 4.3 der Ausgangsanschlussbahn verbunden ist. Die erfindungsgemässe Unterbrechung der Verbindungsschnittstelle 11 verhindert eine Aktivierung der elektronischen Steuerung 6 des Lichterzeugermoduls 10b.

Wie später noch erörtert wird, ist eine besondere Ausgestaltung der Erfindung dergestalt, dass die Eingangs- und Ausgangsanschlussbahn 5.3 des ersten Lichterzeugungsmoduls 10a mit der Eingangs- und Ausgangsanschlussbahn 5.3 des zweiten Lichterzeugungsmoduls 10b jedoch verbunden ist (wie auch die anderen jeweiligen Sekundärteile untereinander elektrisch verbunden sind). Bei dieser Ausführung ergibt sich somit, dass im Falle der gezeigten Lötbrücke 9 zwischen der Eingangs- und Ausgangsanschlussbahnen 4.3 und 5.3 auch das zweite Lichterzeugermodul 10b an dem Sekundärteil 5.3. das gleiche elektrische Signal erhält wie an der Eingangs- und Ausgangsanschlussbahnen 5.3 des ersten Moduls 10a. In diesem Fall würde somit auch die LED's von dem Lichterzeugermodul 10b gleichartig leuchten wie jene von dem Lichterzeugermodul 10a, obwohl an der Verbindungsschnittstelle 11 eine Unterbrechung vorliegt.

Fig. 3 zeigt den Bereich der unterbrochenen Eingangs- und Ausgangsanschlussbahnen 4.1 - 4.3 bzw. 5.1 - 5.3 vergrössert und mit offenen Verbindungsschnittstellen 11.

Fig. 4 zeigt in selbsterklärlicher Art mehr von der Verdrahtung eines konkreten Ausführungsbeispiels, bei dem ersichtlich ist, dass drei Widerstände 12.1 - 12.3 dafür verantwortlich sind, dass bei einer jeweiligen Signaleinspeisung unterschiedliche Spannungen an die elektronische Steuerung 6 gelangen. In der vorliegenden Darstellung ist V- durch eine Lötbrücke 9 oder - wie hier konkret gezeigt - durch eine durchgängige Eingangs- und Ausgangsanschlussbahn 2 an die Stromversorgung anschliessbar, mit dem Effekt, dass der Widerstand R1/12.1 V-an die elektronische Steuerung 6 durchleitet und für einen entsprechenden Signaleingang bei der elektronischen Steuerung 6 bewirkt, der in der Folge durch die elektronische Steuerung 6 zu einer spezifischen Bestromung der LED's 3 führt. An den markierten Verbindungsschnittstellen 11.1 und 11.2 ist die Verbindung unterbrochen, so dass obwohl Eingangs- und Ausgangsanschlussbahnen 4.1. und 4.2 am gleichen Potential wie die angegebene Eingangs- und Ausgangsanschlussbahn 2 liegt (siehe die elektrischen Verbindungslinien zwischen 2, 4.1 und 4.2), führt dies zu keiner Signalabgabe an die Eingangs- und Ausgangsanschlussbahnen 5.1. und 5.2 auf der linken Seite des Lichterzeugungsmoduls 10. Deshalb sind auch die Eingangs- und Ausgangsanschlussbahnen 5.1 und 5.2 auf der rechten Seite spannungsfrei, da über Leiterbahnen 14.1 und 14.2 das Potential von den Eingangs- und Ausgangsanschlussbahnen 5.1. und 5.2. auf der linken Seite durchgeschleift ist.

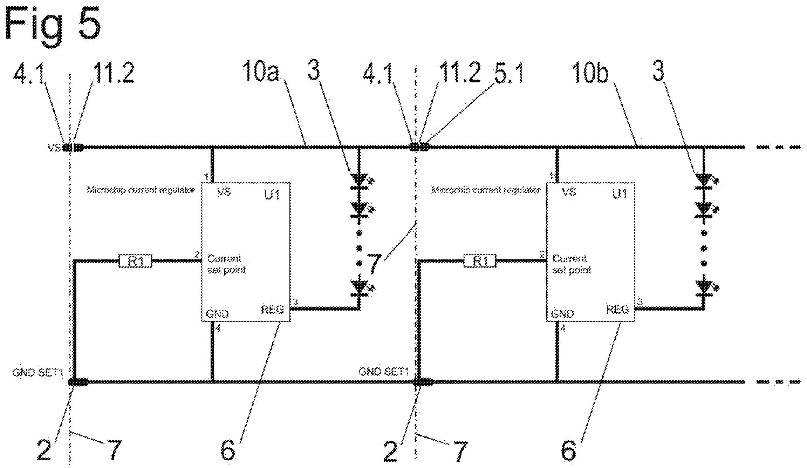

Fig. 5 zeigt demgegenüber einen wesentlich einfacheren SELV, der im Wesentlichen dem Stand der Technik entspricht mit Ausnahme der Tatsache, dass dieser SELV an den Verbindungsschnittstellen 11.2 je eine markierte Verbindungsschnittstelle aufweist.

In dieser konkreten Ausgestaltung ist an der linken Verbindungsschnittstelle 11.2 eine Lötbrücke 9 appliziert, während an der rechten markierten Verbindungsschnittstelle 11.2 eine solche Lötbrücke 9 fehlt. Gleichzeitig fehlt bei diesem Aufbau (gegenüber Fig. 4) eine Leiterbahn 14, so dass die Eingangs- und Ausgangsanschlussbahn 5.1 an der linken Seite nicht mit der Eingangs- und Ausgangsanschlussbahn 5.1. an der rechten Seite des Lichterzeugermoduls 10a verbunden ist, was zur Folge hat, dass in der gezeigten Schaltung 10a Licht erzeugen werden kann, im Lichterzeugermodul 10b jedoch nicht.

Schliesst man jedoch zu einem späteren Zeitpunkt die markierte Verbindungsschnittstelle 11.2 an der rechten Seite von dem Lichterzeugermodul 10a, führt das auch zu einer Spannungsversorgung vom Lichterzeugungsmodul 10b. Diese Manipulationen sind rückgängig machbar, woraus sich die Flexibilität dieses neuartigen SELV's ergibt.

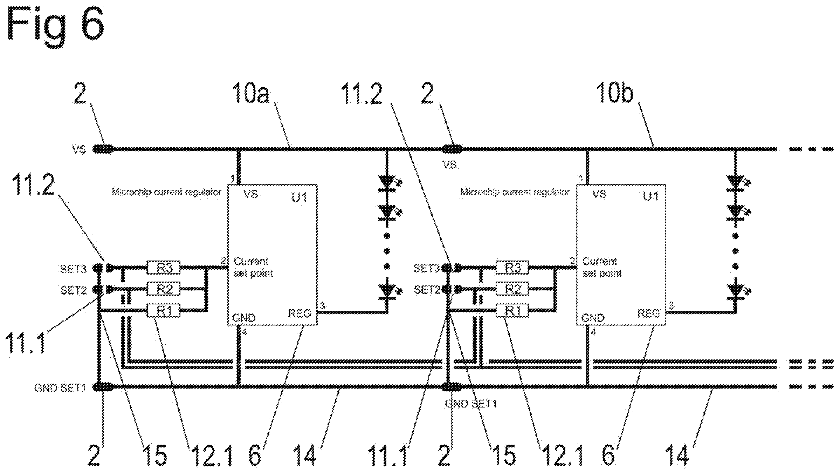

Der Aufbau nach Fig. 6 entspricht in seiner Komplexität wieder dem Aufbau nach Fig. 4 und zeigt konkret eine Bestromung der LED's 3 durch die Signaleinspeisung via Widerstand 12.1 in die elektronische Schaltung 6, die jedoch automatisch zu einer entsprechenden Bestromung aller Lichterzeugermodule 10a und 10b führt, da über die Leiterbahn 14 und die fixe Verbindung an der Verbindungsstelle 15 der Widerstand 12.1 in allen Lichterzeugermodulen 10a und 10b mit Spannung belegt wird und demzufolge jede elektronische Steuerung 6 das gleiche Signal erhält.

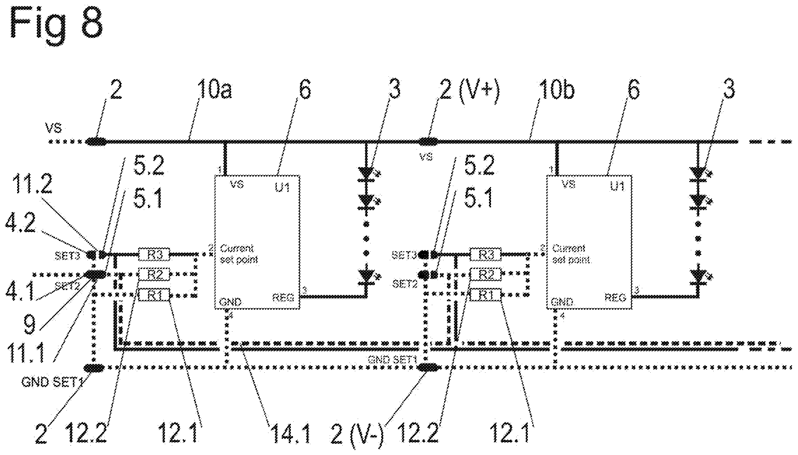

U1 in den Figs. 4-9 zeigt symbolisch einen Konstanstromregler (LED-Treiber), z. B. Infineon BCR430U. In anderen Worten ausgedrückt, wird zwischen "VS" und "GND SET1" eine Konstantspannung angelegt. Dadurch wird der Stromtreiber gespiesen. Über die Widerstände R1-R3 kann der gewünschte Betriebsstrom für die LED eingestellt werden (grösserer Widerstand = kleinerer Strom). Die elektronische Steuerung 6 (ein Microkontroller) regelt den eingestellten Strom zwischen VS(1) und REG(3). Wird nun eine Spannung zwischen "VS" und "SET2" angelegt und dort die Verbindungsschnittstelle 11.1 geschlossen (wie hier nicht gezeigt), erhält man einen anderen Betriebsstrom für die LED, was aus Fig. 8 ersichtlich ist.

Die Eingangs- und Ausgangsanschlussbahn (Lötpad) oder ein Stecker muss so gestaltet sein, dass man automatisch eine Lötbrücke erstellt (z. B GND und R2 verbindet), wie in Fig. 8 gezeigt.

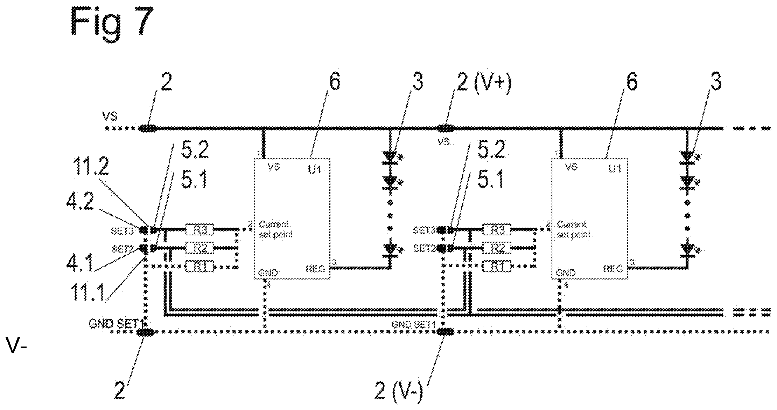

Fig. 7 zeigt den in Fig. 6 beschriebenen Aufbau in der dortigen Beschaltung jedoch mit deutlich sichtbaren Strompfaden.

In Fig. 8 kann man auch erkennen, dass aufgrund der unter Spannung stehenden Leiterbahnen 14 und 14.1 auch die Nachfolgemodule ihr Signal für die elektronische Steuerung 6 via der Widerstände 12.1. und 12.2. erhalten, was zu einer definitionsgemäss anderen Lichtleistung führt.

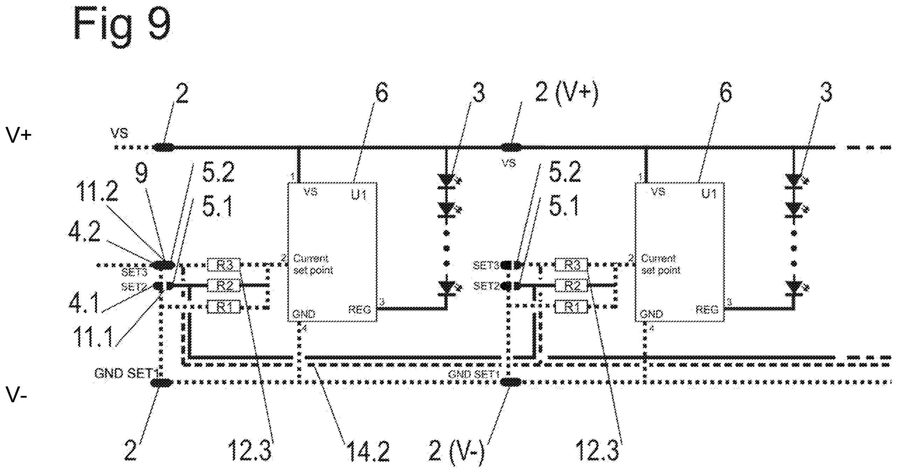

Fig. 9 zeigt den gleichen Aufbau wie Fig. 8 jedoch ist dort anstelle Widerstand 12.2 der Widerstand 12.3 im Signalpfad zur elektronischen Steuerung 6, was dementsprechend eine andere Lichtleistung erzielt, sofern der Widerstand 12.3. eine andere Grösse hat als R.2.

Eine weitere, nicht gezeigte Variante wäre, dass alle beiden markierten Verbindungsschnittstellen 11 verbunden sind, so dass alle drei Widerstande 12 zum Einsatz kommen.

Durch die Erfindung wird eine allfällige Dimmbarkeit des SELV's nicht beeinträchtigt, da diese üblicherweise durch einen externen Dimmer in Verbindung mit der elektronischen Steuerung 6 verwendbar ist.

Ein solcher Dimmer wäre vom Effekt gegebenenfalls auch als Alternative zur Erfindung selbst anzusehen, erzeugt jedoch wesentlich mehr Aufwand an der Anwenderseite, da er wesentlich teuer ist und eine zusätzliche Installation am Aufstellort der SELV-Beleuchtung erfordert. Ausserdem haben solche Dimmer im Konstantspannungsbereich noch folgende Nachteile: Konstantspannungsdimmer sind als PWM Dimmer ausgebildet. Diese haben den Nachteil, dass sie aus demselben Grund anfällig auf Brummen (Geräusche) sind. Insbesondere betrifft das auch den Elektronik-Bereich im Zusammenhang mit Video- Konferenzen / Filmaufnahmen, Tonaufnahmen usw., wo aufgrund des PWM-Effektes solche Dimmer nicht eingesetzt werden können.

Figur 10 zeigt ein Ausführungsbeispiel eines Konstantspannungs-LED-Streifens mit einem Lichterzeugermodul 10a, wobei drei Lichtstromstärken auswählbar sind. Der Aufbau des Lichterzeugermoduls 10a umfasst eine Reihenschaltung LEDs 3 mit den einzelnen LEDs 1-8, welche eingangsseitig an der Versorgungsleitung V+ und ausgangsseitig an der elektrischen Steuerung 6 angeschlossen sind. Die elektrische Steuerung 6 steuert die Lichtleistung der LEDs 3 und sorgt für gleichbleibende Lichtstärke in Abhängigkeit des Ausgangsstroms der elektrischen Steuerung 6. Die elektrische Steuerung 6 ist eingangsseitig an die Versorgungsspannung V+ und ausgangsseitig an mehrere Leitungsbahnen angeschlossen. Über die Leitungsbahnen ist der Ausgangsstrom der elektrischen Steuerung 6 einstellbar. Im Einzelnen sind die Leitungsbahnen in Fig. 10 wie folgt bezeichnet: GND, RS1 und RS2.

Im Auslieferungs- und Betriebszustand fliesst der Ausgangsstrom der elektrischen Steuerung 6 über die Leitungsbahn GND auf Masse ab. Die LEDs 3 werden in genanntem Zustand mit 5,5W Leistung betrieben. Das Spannungspotential auf der Leitungsbahn GND gleicht dem Spannungspotential an den Eingangs- und Ausgangsanschlussbahnen 2 sowie der Leiterbahn 14. Da die Leiterbahn 14 den LED-Streifen durchschleift, liegt an den elektrischen Steuerungen aller Lichterzeugungsmodule des LED-Streifens (nicht gezeigt) gleiches Spannungspotential ausgangsseitig an.

Zur Veränderung der Lichtleistung an den LEDs 3 stehen im Ausführungsbeispiel gemäß Figur 10 folgende Möglichkeiten zur Verfügung. Der Ausgangsstrom der elektrischen Steuerung 6 lässt sich durch Schließen von Verbindungsschnittstellen 11.1 bzw. 11.2 an den Eingangs- und Ausgangsanschlussbahnen 4 und 5 verändern. Voraussetzung dafür ist die Bestromung der Leiterbahnen RS1 bzw. RS2. Ist beispielsweise die Leiterbahn RS1 bestromt, so stellt sich ausgangsseitig an der elektrischen Steuerung 6 ein im Vergleich zum Auslieferungs- und Betriebszustand unterschiedliches Spannungspotenzial ein. Mit der Bestromung der Leiterbahn RS1 folgt der Betrieb der LEDs 3 mit einer Leistung von 11W. Das Spannungspotential an der Leiterbahn RS1 wird über die Leiterbahn 14.1 von den Eingangs- und Ausgangsanschlussbahnen auf der linken Seite in Fig. 10 auf die der rechten Seite von Fig. 10 durchgeschleift und steht damit den Eingangs- und Ausgangsanschlussbahnen des nachfolgenden und aller anschliessenden Lichterzeugungsmodule (nicht gezeigt) zur Verfügung, sodass die elektrische Steuerung des bzw. der nachfolgenden Moduls/e (nicht gezeigt) genau den gleichen Ausgangsstrom einstellt wie die elektrische Steuerung 6 des Lichterzeugungsmoduls 10a. So kann über die Schließung bzw. Öffnung der Verbindungschnittstelle 11.1 bzw. 11.2 an einem Modul 10a nicht nur die Lichtleistung der LEDs 3 am Modul 10a eingestellt werden, sondern zugleich die Lichtleistung von LEDs (nicht gezeigt) nachfolgender Module (nicht gezeigt).

Fig. 11 zeigt ein aufgerolltes SELV aus mehreren Lichterzeugermodulen gemäss dem Stand der Technik und darunter die Durchschneidesituation an diesen Lichterzeugermodulen mit je drei Markierungen für unterschiedliches Durchtrennen des SELV's zur Ablängung bei der Leuchtenherstellung.

Zusammenfassung der bevorzugten Ausführung in anderen Worten: Je nach Anschluss der Zuleitung an Lötpad V+ 2 und Lötpad V- 4.x kann mittels einer Lötbrücke 9 gemäss Fig. 2 zum Lötpad "Brightness Controll (5.x)" eine Verbindung erstellt werden, durch die die LED's mit unterschiedlicher Leistung/Lichtstrom angesteuert werden. Gemäss der Weiterentwicklung wird durch die elektronische Schaltung 6 (die auch als Blackbox dargestellt ist) der LED Strip 1 in seiner gesamten Länge - sprich auch an jeder folgenden elektronische Schaltung - auf die entsprechende Leistung/Lichtstrom eingestellt.

Als kleinste (breiteste) gemeinsame Erfindung durch alle Varianten liegt vor:
Ein endloser Konstantspannungs-LED-Streifen (SELV) bzw. ein endloses LED-Band mit flexiblem Träger mit einem ersten, einem nachfolgenden zweiten und weiteren nachfolgenden n-ten - seriell angeordneten und voneinander trennbaren - parallel geschalteten Lichterzeugermodul (10) auf dem flexiblen Träger, mit Festkörperbeleuchtungsmittel und einer Ansteuerungsschaltung (6) bzw. elektronischen Stromregler-Steuerung dafür sowie mit wenigstens drei Eingangs- und Ausgangsanschlussbahnen (2,4,5) zum Anschliessen des ersten Lichterzeugermoduls (10) oder des ersten und aller nachfolgenden Lichterzeugermodule (10) an eine Versorgungsspannung (8, V+, V-), wobei quer zum endlosen Konstantspannungs-LED-Streifen (SELV) bzw. quer zum endloses LED-Band an jeder Eingangs- und Ausgangsanschlussbahn (2,4, 5) wenigstens je eine Durchschnittstelle (7) zum Durchtrennen des Konstantspannungs-LED-Streifens (1) bzw. des endlosen Konstantspannungs-LED-Bandes zwischen zwei Lichterzeugermodulen (10a, 10b) mittels Schneideinrichtung vorgesehen sind und wobei
zwei der drei Eingangs- und Ausgangsanschlussbahnen (4,5) unmittelbar neben der Durchschneidstelle (7) bzw. Durchschnittsstelle wenigstens eine markierte, als Kontaktstelle ausgebildete Verbindungsschnittstelle (11) aufweisen, an der die Spannungsversorgung (8) des jeweils ersten Lichterzeugermoduls (10) oder des jeweils abgetrennten n-ten Lichterzeugermoduls selektiv und willkürlich unterbrechbar oder herstellbar ist, so dass die elektronische Stromregler-Steuerung (6) wahlweise an alternativen Eingängen mit einer Eingangsspannung aus dem Netz verbindbar ist.

Dieser Aufbau ermöglicht es erstmals, endloser Konstantspannungs-LED-Streifen (SELV) bzw. ein endloses LED-Band mit flexiblem Träger abzulängen, in Lampenkörper einzusetzen und im Anschluss daran in unmittelbarer Nähe der Ablängstelle (Durchschnittstelle) auch wahlweise Leiterbahnen mit Spannung zu beaufschlagen oder von Betriebsspannung fernzuhalten. Je nach Verschaltung der drei Eingangs- und Ausgangsanschlussbahnen (2,4,5) können derart unterschiedliche Effekte in der Beleuchtung durch ein und denselben Konstantspannungs-LED-Streifen (SELV) bzw. durch ein und dasselbe LED-Band erzielt werden. Dies führt zu einer Vereinfachung der Lagerhaltung aber auch zu einer Flexibilisierung in der Montage von Leuchten.

### Bezugszeichenliste

- 1: Konstantspannungs-LED-Streifen (SELV) > LED Strip
- 2: Eingangs- und Ausgangsanschlussbahn durchgängig > Lötpad, V+ oder V-
- 3: LED oder vergleichbare Lichterzeugungselemente
- 4: Primärteil bzw. Primärseite einer unterbrochenen Eingangs- und Ausgangsanschlussbahn
- 4.1: erste unterbrochene Eingangs- und Ausgangsanschlussbahn > erster Primärteil > Lötpad V-1
- 4.2: zweite unterbrochene Eingangs- und Ausgangsanschlussbahn > zweiter Primärteil > Lötpad V-2
- 4.3: dritte unterbrochene Eingangs- und Ausgangsanschlussbahn > dritter Primärteil > Lötpad V-3
- 5: Sekundärteil bzw. Sekundärseite einer unterbrochenen Eingangs- und Ausgangsanschlussbahn
- 5.1: erster Sekundärteil > Lötpad jenseits der Verbindungsschnittstelle 11.1 > Brightness Controll 1
- 5.2: zweiter Sekundärteil > Lötpad jenseits der Verbindungsschnittstelle 11.2 > Brightness Controll 2
- 5.3: dritter Sekundärteil > Lötpad jenseits der Verbindungsschnittstelle 11.3 > Brightness Controll 3
- 6: elektronische Steuerung bzw. elektronischen Stromregler-Steuerung
- 7: Durchschneidlinie SELV-Strip bzw. Durchschnittsstellen bzw. Durchschnittstelle
- 8: Zuleitung, Spannungsversorgung bzw. Versorgungsspannung
- 9: Lötbrücke V-3 "Brightness Control 3" bzw. Leiterbrücke
- 10: Lichterzeugermodul
- 10a: erstes Lichterzeugermodul
- 10b: zweites Lichterzeugermodul
- 10c: drittes Lichterzeugermodul
- 10n: n-tes Lichterzeugermodul
- 11: Markierte Verbindungsschnittstelle
- 11.1: erste markierte Verbindungsschnittstelle
- 11.2: zweite markierte Verbindungsschnittstelle
- 11.3: dritte markierte Verbindungsschnittstelle
- 12: Widerstand
- 12.1: erster Widerstand > R1
- 12.2: zweiter Widerstand > R2
- 12.3: dritter Widerstand > R3
- 13: Leitung
- 14: Leiterbahn > GND, RS1 oder RS2
- 14.1: Leiterbahn zu 5.1
- 14.2: Leiterbahn zu 5.2
- 15: Verbindungsstelle

Zusätzliche Bezeichnungen in den Figuren sind dem Elektroniker und somit dem Fachmann und in jeder Sprache international selbstverständlich und werden hier aufgrund ihrer Üblichkeit nicht näher erläutert. Auch kann eine Übersetzung derselben ins Deutsche entfallen. Bei Bedarf können diese auch gelöscht werden, ohne den Umfang der Offenbarung zu ändern.

## Patentansprüche

1. Konstantspannungs-LED-Streifen (1), welcher mehrere, den LED-Streifen (1) durch Modulaneinanderreihung ausbildende, voneinander an Trennstellen (7) trennbare bzw. verbindbare Lichterzeugermodule (10) aufweist, wobei jedes der Lichterzeugermodule (10) jeweils aufweist:
• jeweils Eingangs- und Ausgangsanschlussbahnen (2,5) an den Trennstellen (7) des Lichterzeugermoduls (10),
• zumindest eine LED (3) oder zumindest ein anderes Festkörperbeleuchtungsmittel,
• ein durchgeschleiftes Netz mit einem Anschluss V+ und einem Anschluss V- zur Spannungsversorgung aller Lichterzeugermodule (10), vorzugsweise mit einer Konstantspannung,
• zumindest eine elektronische Stromregler-Steuerung (6) zur geregelten Bestromung der zumindest einen LED (3) oder des zumindest einen anderen Festkörperbeleuchtungsmittels aus der Versorgungsspannung,
**gekennzeichnet durch**
• wenigstens eine zusätzliche elektrische Leitung (14.1,14.2), die jeweils einerseits zur elektronischen Stromregler-Steuerung (6) verbindet und andererseits durchgeschleift ist von einem Sekundärteil (5.1,5.2) einer ersten Eingangs- und Ausgangsanschlussbahn (2,5) zu einem Sekundärteil (5.1,5.2) der nachfolgenden Eingangs- und Ausgangsanschlussbahn (2,5) des jeweils nachfolgenden Lichterzeugermoduls (10) zum Anlegen wenigstens einer Steuerspannung,
• wobei die elektronische Stromregler-Steuerung (6) so ausgelegt ist, dass sie bei Nichtanliegen der wenigstens einen Steuerspannung eine andere Bestromung der zumindest einen LED (3) oder des zumindest einen anderen Festkörperbeleuchtungsmittels vornimmt, als beim Anliegen der wenigstens einen Steuerspannung,
• wobei die Sekundärteile (5.1,5.2) mit der elektronischen Stromregler-Steuerung elektrisch in Verbindung stehen und
an einer markierten, insbesondere nach Art eines Schalters trenn- bzw. verbindbaren, Verbindungsstelle (11) auf dem Lichterzeugermodul (10) jeweils mit einem Primärteil (4) des jeweiligen Lichterzeugermoduls (10) elektrisch verbindbar sind, wobei die markierte Verbindungsstelle (11) eines ersten Lichterzeugermoduls (10) eine Einstellung der Lichtleistung aller miteinander verbundenen Lichterzeugermodule (10) erlaubt.

2. Konstantspannungs-LED-Streifen (1) nach dem vorherigen Anspruch, **dadurch gekennzeichnet, dass** der jeweilige Primärteil (4) auf einem bei jedem Lichterzeugermodul (10) gleichen, definierten Spannungspotenzial als Steuerspannung liegt.

3. Konstantspannungs-LED-Streifen (1) nach Anspruch 2, **dadurch gekennzeichnet, dass** das definierte Spannungspotenzial als Steuerspannung das Spannungspotenzial des Anschlusses V+ oder das Spannungspotenzial des Anschlusses V- ist, insbesondere speziell das Spannungspotenzial des Anschlusses V- ist, insbesondere wobei Primärteile (4) aller Lichterzeugermodule (10) auf dem gleichen Spannungspotenzial liegen bzw. elektrisch verbunden sind.

4. Konstantspannungs-LED-Streifen (1) nach einem der vorherigen Ansprüche, **dadurch gekennzeichnet, dass** die markierte Verbindungsstelle (11) jeweils, vorzugsweise reversibel, trennbar bzw. verbindbar ist.

5. Konstantspannungs-LED-Streifen (1) nach einem der vorherigen Ansprüche, **dadurch gekennzeichnet, dass** die markierte Verbindungsstelle (11) jeweils als eine Lötbrücke ausgebildet ist.

6. Konstantspannungs-LED-Streifen (1) nach einem der vorherigen Ansprüche 1 bis 4, **dadurch gekennzeichnet, dass** die markierte Verbindungsstelle (11) jeweils mit einem vorkonfigurierten Klemmstecker oder Schalter, insbesondere an einem konfektionierten Kabel, ausgebildet ist.

7. Konstantspannungs-LED-Streifen (1) nach einem der vorherigen Ansprüche, **dadurch gekennzeichnet, dass** der jeweilige Sekundärteil (5.1,5.2) mit der elektronischen Stromregler-Steuerung (6) über elektronische Bauteile, insbesondere einen Widerstand (1), elektrisch in Verbindung steht.

8. Konstantspannungs-LED-Streifen (1) nach einem der vorherigen Ansprüche, **dadurch gekennzeichnet, dass** jeweils über mehrere der zusätzlichen elektrische Leitungen (14.1,14.2), mit vorzugsweise unterschiedlichen elektronischen Bauteilen bzw. Widerständen (12), insbesondere diskret in definierten Stufen, eine Leuchtstärke eines ersten Lichterzeugermoduls (10) und allen mit diesem verbundenen Lichterzeugermodulen (10) einstellbar ist.

9. Konstantspannungs-LED-Streifen (1) nach einem der vorherigen Ansprüche, **dadurch gekennzeichnet, dass** die elektronische Stromregler-Steuerung (6) jeweils über ein elektronisches Bauteil, insbesondere einen Widerstand (12), untrennbar bzw. Verbindungsstellenlos mit dem Anschluss V- verbunden ist.

10. Konstantspannungs-LED-Streifen (1) nach einem der vorherigen Ansprüche, **dadurch gekennzeichnet, dass** der Konstantspannungs-LED-Streifen (1) flexibel ausgebildet ist, insbesondere als ein LED-Band mit flexiblem Träger.

11. Konstantspannungs-LED-Streifen (1) nach einem der vorherigen Ansprüche 1 bis 9, **dadurch gekennzeichnet, dass** der Konstantspannungs-LED-Streifen (1) als starrer LED-Streifen ausgebildet ist.

12. Konstantspannungs-LED-Streifen (1) nach einem der vorherigen Ansprüche, **dadurch gekennzeichnet, dass** im Auslieferungszustand des Konstantspannungs-LED-Streifens (1) alle markierten Verbindungsstellen (11) verbunden sind und nach Bedarf durch Auskratzen oder Entlöten trennbar sind, oder dass im Auslieferungszustand alle markierten Verbindungsstellen (11) offen sind und nach Bedarf durch Verlöten oder durch einen vorkonfigurierten Klemmstecker gegebenenfalls an einem konfektionierten Kabel verbindbar sind, der im geklemmten Zustand Abstände zwischen Anschlussbahnteilen (2,5) überbrückt, insbesondere wobei solche Klemmstecker im Lieferzustand zum Konstantspannungs-LED-Streifen beigegeben sind.

13. Verfahren zur Auswahl einer bestimmten Leuchtstärke eines Konstantspannungs-LED-Streifens (1),
welcher mit mehreren voneinander trennbaren bzw. verbindbaren, gleichartigen Lichterzeugermodulen (10) ausgebildet ist,
bei welchem Verfahren durch ein Trennen bzw. Verbinden eines Primärteils (4.1,4.2) und eines Sekundärteils (5.1,5.2) an einer markierten Verbindungsstelle (11) auf einem, insbesondere einem einzigen, der Lichterzeugermodule (10) die Leuchtstärke des gesamten Konstantspannungs-LED-Streifens (1) einstellbar ist,
**dadurch gekennzeichnet, dass**
- mit dem Trennen bzw. Verbinden der markierten Verbindungsstelle (11) auf einem der Lichterzeugermodule (10) wahlweise ein Anlegen einer Steuerspannung an zumindest einer zusätzlichen elektrischen Leitung (14.1,14.2) erfolgt,
welche zumindest eine zusätzliche elektrische Leitung (14.1,14.2) neben einer Versorgungsspannung über alle verbundenen Lichterzeugermodule (10) durchgeschleift ist und welche zumindest eine zusätzliche elektrische Leitung (14.1,14.2) mit einer jeweils auf jedem der Lichterzeugermodule (10) vorhanden elektronischen Stromregler- Steuerung (6) verbunden ist und bei dieser eine Ansteuerung eines Werts einer Bestromung von LEDs (3) oder eines Festkörperbeleuchtungsmittels dieses Lichterzeugermoduls (10) bewirkt,
wobei die wenigstens eine zusätzliche elektrische Leitung (14.1,14.2) jeweils durchgeschleift ist von einem Sekundärteil (5.1,5.2) einer ersten Eingangs- und Ausgangsanschlussbahn (2,5) zu einem Sekundärteil (5.1,5.2) der nachfolgenden Eingangs- und Ausgangsanschlussbahn (2,5) des jeweils nachfolgenden Lichterzeugermoduls (10) zum Anlegen der Steuerspannung,
wobei die elektronische Stromregler-Steuerung (6) so ausgelegt ist, dass sie bei Nichtanlegen der Steuerspannung eine andere Bestromung der zumindest einen LED (3) oder des einen Festkörperbeleuchtungsmittels vornimmt, als beim Anlegen der Steuerspannung.

14. Verfahren nach dem vorherigen Verfahrensanspruch, **dadurch gekennzeichnet, dass** die wenigstens eine zusätzliche Leitung (14.1,14.2) mit der Steuerspannung belegt wird, indem über die markierte Verbindungsstelle (11) auf dem einen Lichterzeugermodul (10) eine unterbrochene Zuleitung der entsprechenden zusätzlichen Leitung (14.1,14.2) mittels Lötbrücke oder mittels voreingestellten Klemmsteckers auf dem Lichterzeugermodul (10) geschlossen wird.

15. Verfahren nach einem der vorherigen Verfahrensansprüche, **dadurch gekennzeichnet, dass** das Anlegen der Steuerspannung durch Anlegen der Versorgungsspannung erfolgt, insbesondere über die markierte Verbindungsstelle (11).

## Claims

1. A constant-voltage LED strip (1), which has a plurality of light-generation modules (10), which form the LED strip (1) by means of a modular arrangement in series, and can be separated or connected from one another at separation points (7), wherein each of the light-generation modules (10) has:
• input and output connection tracks (2, 5) at the separation points (7) of the light-generation module (10),
• at least one LED (3), or at least one other solid-state means of illumination,
• a looped-through network with a V+ terminal and a V- terminal for the power supply of all light-generation modules (10), preferably at a constant voltage,
• at least one electronic current-regulator controller (6) for the regulated energisation of the at least one LED (3), or the at least one other solid-state means of illumination, from the supply voltage,
**characterised by**
• at least one additional electrical line (14.1, 14.2), which in each case on the one hand connects to the electronic current-regulator controller (6), and on the other hand is looped-through from a secondary part (5.1, 5.2) of a first input and output connection path (2, 5) to a secondary part (5.1, 5.2) of the subsequent input and output connection path (2, 5) of the respectively subsequent light-generation module (10), for the application of at least one control voltage,
• wherein the electronic current-regulator controller (6) is designed such that in the absence of the application of the at least one control voltage, it undertakes another energisation of the at least one LED (3), or the at least one other solid-state means of illumination, by means other than the application of the at least one control voltage,
• wherein the secondary parts (5.1, 5.2) are electrically connected to the electronic current-regulator controller and
at a marked connection point (11), in particular in the form of a switch, which can be separated or connected, can in each case be electrically connected on the light-generation module (10), with a primary part (4) of the respective light-generation module (10), wherein the marked connection point (11) of a first light-generation module (10) allows an adjustment of the light output of all interconnected light-generation modules (10) .

2. The constant-voltage LED strip (1) in accordance with the previous claim, **characterised in that** the respective primary part (4) lies at a defined voltage potential, which for each light-generation module (10) is the same as the control voltage.

3. The constant-voltage LED strip (1) in accordance with Claim 2, **characterised in that** the voltage potential defined as the control voltage is the voltage potential of the V+ terminal, or the voltage potential of the V- terminal, in particular specifically the voltage potential of the V-terminal, in particular wherein primary parts (4) of all light-generation modules (10) lie, that is to say, are electrically connected, at the same voltage potential.

4. The constant-voltage LED strip (1) in accordance with one of the preceding claims, **characterised in that** the marked connection point (11) can in each case be separated or connected, preferably reversibly.

5. The constant-voltage LED strip (1) in accordance with one of the preceding claims, **characterised in that** the marked connection point (11) is in each case designed as a solder bridge.

6. The constant-voltage LED strip (1) in accordance with one of the preceding Claims 1 to 4, **characterised in that** the marked connection point (11) is in each case designed with a preconfigured clamping connector or switch, in particular on an assembled cable.

7. The constant-voltage LED strip (1) in accordance with one of the preceding claims, **characterised in that** the respective secondary part (5.1, 5.2) is electrically connected to the electronic current-regulator controller (6) via electronic components, in particular a resistor (1).

8. The constant-voltage LED strip (1) in accordance with one of the preceding claims, **characterised in that** via a plurality of the additional electrical lines (14.1, 14.2), with preferably different electronic components, that is to say, resistors (12), a luminous intensity of a first light-generation module (10), and all light-generation modules (10) connected to it, can in each case be adjusted, in particular, discretely in defined steps.

9. The constant-voltage LED strip (1) in accordance with one of the preceding claims, **characterised in that** the electronic current-regulator controller (6) is in each case inseparably, that is to say, in the absence of a connection point, connected to the V-terminal via an electronic component, in particular a resistor (12).

10. The constant-voltage LED strip (1) in accordance with one of the preceding claims, **characterised in that** the constant-voltage LED strip (1) is designed to be flexible, in particular as an LED strip with a flexible support.

11. The constant-voltage LED strip (1) in accordance with one of the preceding Claims 1 to 9, **characterised in that** the constant-voltage LED strip (1) is designed as a rigid LED strip.

12. The constant-voltage LED strip (1) in accordance with one of the preceding claims, **characterised in that** in the as-delivered state of the constant-voltage LED strip (1), all marked connection points (11) are connected, and can be separated as required by scratching out or desoldering, or **in that**, in the as-delivered state all marked connection points (11) are open, and can be connected as required by soldering or by a preconfigured clamping connector, if required on an assembled cable, which in the clamped state bridges across distances between connection path parts (2, 5), in particular wherein in the as-delivered state such clamping connectors are included with the constant-voltage LED strip.

13. A method for the selection of a specific luminous intensity of a constant-voltage LED strip (1),
which is designed with a plurality of light-generation modules (10) of the same type that can be separated from, or connected to, one another,
in which method the luminous intensity of the entire constant-voltage LED strip (1) can be adjusted by the separation or connection of a primary part (4.1, 4.2) and a secondary part (5.1, 5.2) at a marked connection point (11), on one, in particular a single one, of the light-generation modules (10),
**characterised in that**
- with the separation or connection of the marked connection point (11) on one of the light-generation modules (10), a control voltage is optionally applied to at least one additional electrical line (14.1, 14.2),
which at least one additional electrical line (14.1, 14.2), together with a supply voltage, is looped through all the connected light-generation modules (10), and which at least one additional electrical line (14.1, 14.2) is connected to an electronic current-regulator controller (6) present on each of the light-generation modules (10), and thereby causes a value of an illumination of LEDs (3), or of a solid-state means of illumination, of this light-generation module (10) to be controlled, wherein the at least one additional electrical line (14.1, 14.2) is in each case looped through from a secondary part (5.1, 5.2) of a first input and output connection path (2, 5) to a secondary part (5.1, 5.2) of the subsequent input and output connection path (2, 5) of the respectively subsequent light-generation module (10) for the application of the control voltage,
wherein the electronic current-regulator controller (6) is designed such that when the control voltage is not applied, it undertakes another energisation of the at least one LED (3), or the one solid-state means of illumination, by means other than the application of the control voltage.

14. The method in accordance with the preceding method claim, **characterised in that** the at least one additional line (14.1, 14.2) is assigned the control voltage by the closure of an interrupted supply line of the corresponding additional line (14.1, 14.2) via the marked connection point (11) on the one light-generation module (10) by means of a solder bridge, or by means of a preset clamping connector on the light-generation module (10).

15. The method in accordance with one of the preceding method claims, **characterised in that** the control voltage is applied by application of the supply voltage, in particular via the marked connection point (11).

## Revendications

1. Bande à diodes électroluminescentes (DEL) à tension constante (1), laquelle comporte plusieurs modules générateurs de lumière (10) constituant la bande à diodes électroluminescentes (DEL) (1) par juxtaposition modulaire pouvant être séparés à des points de séparation (7) ou reliés l'un à l'autre, sachant que chacun des modules générateurs de lumière (10) comporte respectivement :
• des pistes de raccordement d'entrée et de sortie (2, 5) respectivement aux points de séparation (7) du module générateur de lumière (10),
• au moins une diode électroluminescente (DEL) (3) ou au moins un autre moyen d'éclairage à semiconducteurs,
• un réseau bouclé avec une connexion V+ et une connexion V- pour l'alimentation en tension de tous les modules générateurs de lumière (10), de préférence avec une tension constante,
• au moins une commande de régulateur de courant électronique (6) pour l'alimentation en courant régulée d'au moins une DEL (3) ou d'au moins un autre moyen d'éclairage à semiconducteurs à partir de la tension d'alimentation,
**caractérisé en ce que**
• au moins une ligne électrique supplémentaire (14.1, 14.2), qui relie respectivement d'une part à la commande de régulateur de courant électronique (6) et est d'autre part bouclée par une partie secondaire (5.1, 5.2) d'une première piste de raccordement d'entrée et de sortie (2, 5) à une partie secondaire (5.1, 5.2) de la piste de raccordement d'entrée et de sortie (2, 5) suivante du module générateur de lumière (10) respectivement suivant pour application d'au moins une tension de commande,
• sachant que la commande de régulateur de courant électronique (6) est conçue de telle sorte qu'en cas de non application d'au moins une tension de commande, elle procède à une autre alimentation en courant d'au moins une DEL (3) ou d'au moins un autre moyen d'éclairage à semiconducteurs que lors de l'application d'au moins une tension de commande,
• sachant que les parties secondaires (5.1, 5.2) sont électriquement en liaison avec la commande de régulateur de courant électronique, et
peuvent être électriquement reliées à un point de liaison (11) marqué, séparable ou reliable, en particulier à la façon d'un interrupteur, sur le module générateur de lumière (10), respectivement à une partie primaire (4) du module générateur de lumière (10) respectif, sachant que le point de liaison marqué (11) d'un premier module générateur de lumière (10) permet un réglage de la puissance lumineuse de tous les modules générateurs de lumière (10) reliés entre eux.

2. Bande à diodes électroluminescentes (DEL) à tension constante (1) selon la revendication précédente, **caractérisée en ce que** la partie primaire (4) respective se situe en tant que tension de commande à un potentiel de tension défini, identique pour chaque module générateur de lumière (10).

3. Bande à diodes électroluminescentes (DEL) à tension constante (1) selon la revendication 2, **caractérisée en ce que** le potentiel de tension défini en tant que tension de commande, est le potentiel de tension de connexion V+ ou le potentiel de tension de la connexion V-, est en particulier spécialement le potentiel de tension de la connexion V-, en particulier sachant que les parties primaires (4) de tous les modules générateurs de lumière (10) se situent au même potentiel de tension ou sont électriquement reliées.

4. Bande à diodes électroluminescentes (DEL) à tension constante (1) selon l'une quelconque des revendications précédentes, **caractérisée en ce que** le point de liaison marqué (11) est respectivement de préférence réversible, peut être séparé ou relié.

5. Bande à diodes électroluminescentes (DEL) à tension constante (1) selon l'une quelconque des revendications précédentes, **caractérisée en ce que** le point de liaison marqué (11) est à chaque fois constitué sous la forme d'un pont soudé.

6. Bande à diodes électroluminescentes (DEL) à tension constante (1) selon l'une quelconque des revendications 1 à 4, **caractérisée en ce que** le point de liaison marqué (11) est constitué respectivement avec un connecteur de serrage préconfiguré ou un interrupteur, en particulier sur un câble surmoulé.

7. Bande à diodes électroluminescentes (DEL) à tension constante (1) selon l'une quelconque des revendications précédentes, **caractérisée en ce que** la partie secondaire respective (5.1, 5.2) est électriquement en liaison avec la commande de régulateur de courant électronique (6) par le biais de composants électroniques, en particulier une résistance (1).

8. Bande à diodes électroluminescentes (DEL) à tension constante (1) selon l'une quelconque des revendications précédentes, **caractérisée en ce qu'** une intensité lumineuse d'un premier module générateur de lumière (10) et tous les modules générateurs de lumière (10) reliés à celui-ci peuvent être respectivement réglés par le biais de plusieurs des lignes électriques supplémentaires (14.1, 14.2) avec de préférence des composants électroniques différents ou des résistances (12), en particulier de façon discrète à des niveaux définis.

9. Bande à diodes électroluminescentes (DEL) à tension constante (1) selon l'une quelconque des revendications précédentes, **caractérisée en ce que** la commande de régulateur de courant électronique (6) est reliée respectivement à la connexion V- par le biais d'composant électronique, en particulier une résistance (12), de façon séparable ou sans point de liaison.

10. Bande à diodes électroluminescentes (DEL) à tension constante (1) selon l'une quelconque des revendications précédentes, **caractérisée en ce que** la bande à diodes électroluminescentes (DEL) à tension constante (1) est constituée flexible, en particulier sous la forme d'une bande à DEL avec un support flexible.

11. Bande à diodes électroluminescentes (DEL) à tension constante (1) selon l'une quelconque des revendications 1 à 9, **caractérisée en ce que** la bande à diodes électroluminescentes (DEL) à tension constante (1) est constituée sous la forme d'une bande à DEL rigide.

12. Bande à diodes électroluminescentes (DEL) à tension constante (1) selon l'une quelconque des revendications précédentes, **caractérisée en ce qu'** à l'état de distribution de la bande à DEL à tension constante (1), tous les points de liaison marqués (11) sont reliés et peuvent être séparés en cas de besoin par grattage ou dessoudage ou **en ce qu'**à l'état de distribution tous les points de liaison marqués (11) sont ouverts et en cas de besoin peuvent être reliés le cas échéant à un câble surmoulé par soudage ou par un connecteur de serrage préconfiguré, qui fait le pontage à l'état serré de distances entre les parties de piste de raccordement (2, 5), en particulier sachant que des connecteurs de serrage de ce type sont ajoutés à l'état de livraison à la bande à DEL à tension constante.

13. Procédé de sélection d'une certaine intensité lumineuse d'une bande à DEL à tension constante (1),
laquelle est constituée de plusieurs modules générateurs de lumière (10) identiques, séparables les uns des autres ou pouvant être reliés,
procédé pour lequel l'intensité lumineuse de toute la bande à DEL à tension constante (1) peut être réglée par une séparation ou une liaison d'une partie primaire (4.1, 4.2) et d'une partie secondaire (5.1, 5.2) à un point de liaison marqué (11) sur un des modules générateurs de lumière (10), en particulier un module unique,
**caractérisé en ce qu'**
- avec la séparation ou la liaison du point de liaison marqué (11) sur un des modules générateurs de lumière (10), une application d'une tension de commande a lieu sélectivement sur au moins une ligne électrique supplémentaire (14.1, 14.2),
laquelle ligne électrique supplémentaire (14.1, 14.2) au moins est bouclée en plus d'une tension d'alimentation par le bais de tous les modules générateurs de lumière (10) reliés, et laquelle ligne électrique supplémentaire (14.1, 14.2) au moins est reliée à une commande de régulateur de courant (6) électronique existant respectivement sur chacun des modules générateurs de lumière (10), et cause pour celle-ci une activation d'une valeur d'une alimentation en courant des DEL (3) ou d'un moyen d'éclairage à semiconducteurs de ce module générateur de lumière (10),
sachant qu'au moins une ligne électrique supplémentaire (14.1, 14.2) est à chaque fois bouclée par une partie secondaire (5.1, 5.2) d'une première piste de raccordement d'entrée et de sortie (2, 5) à une partie secondaire (5.1, 5.2) de la piste de raccordement d'entrée et de sortie (2, 5) suivante du module générateur de lumière (10) respectivement suivant pour application de la tension de commande,
sachant que la commande de régulateur de courant électronique (6) est conçue de telle manière qu'en cas de non application de la tension de commande, elle procède à une autre alimentation en courant d'au moins une DEL (3) ou d'un moyen d'éclairage à semiconducteurs que lors de l'application de la tension de commande.

14. Procédé selon la revendication de procédé précédente, **caractérisée en ce qu'**au moins une ligne supplémentaire (14.1, 14.2) est occupée par la tension de commande, sur un module générateur de lumière (10), une ligne d'alimentation interrompue de la ligne supplémentaire correspondante (14.1, 14.2) étant fermée par le biais du point de liaison marqué (11) au moyen d'un pont soudé ou d'un connecteur de serrage préréglé sur le module générateur de lumière (10).

15. Procédé selon l'une quelconque des revendications précédentes, **caractérisé en ce que** l'application de la tension de commande a lieu par application de la tension d'alimentation, en particulier par le biais du point de liaison marqué (11).
